(19) Europäisches Patentamt
European Patent Office
Office européen des brevets

(11) **EP 4 568 197 A1**

(12) **EUROPEAN PATENT APPLICATION**

(43) Date of publication:
**11.06.2025 Bulletin 2025/24**

(21) Application number: **24217248.4**

(22) Date of filing: **03.12.2024**

(51) International Patent Classification (IPC):
**H04L 25/02** (2006.01)

(52) Cooperative Patent Classification (CPC):
**H04L 25/022; H04L 25/0256;** H04L 5/0051;
H04L 25/0204; H04L 25/0224

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 KR 20230175936**

(71) Applicant: **Samsung Electronics Co., Ltd.**
**Suwon-si, Gyeonggi-do 16677 (KR)**

(72) Inventor: **LEE, Sunyoung**
**16677 Suwon-si (KR)**

(74) Representative: **Marks & Clerk LLP**
**15 Fetter Lane**
**London EC4A 1BW (GB)**

(54) **METHOD AND APPARATUS FOR PERFORMING CHANNEL ESTIMATION IN WIRELESS COMMUNICATION SYSTEM**

(57)     A method of operating an electronic device includes receiving, from a base station, a signal including a new radio physical downlink shared channel (NR PDSCH) demodulation reference signal (DMRS), performing depatterning by multiplying the received signal by an orthogonal cover code (OCC) matrix, calculating a compressed minimum mean square error (MMSE) weight matrix, based on the received signal, restoring an original MMSE weight matrix from the calculated compressed MMSE weight matrix, and performing linear MMSE (LMMSE)-based channel estimation based on the original MMSE weight matrix and the depatterned received signal.

**FIG. 4**

```
           START
             │
┌────────────────────────────┐
│ RECEIVE SIGNAL INCLUDING DMRS │── S410
│      FROM BASE STATION       │
└────────────────────────────┘
             │
┌────────────────────────────┐
│  DESCRAMBLE DMRS SEQUENCE    │── S415
└────────────────────────────┘
             │
┌────────────────────────────┐
│ PERFORM DEPATTERNING BY MULTIPLYING │── S420
│   RECEIVED SIGNAL BY OCC MATRIX    │
└────────────────────────────┘
             │
┌────────────────────────────┐
│ CALCULATE COMPRESSED MMSE WEIGHT │── S430
│  MATRIX BASED ON RECEIVED SIGNAL │
└────────────────────────────┘
             │
┌────────────────────────────┐
│ RESTORE ORIGINAL MMSE WEIGHT MATRIX │── S440
│ FROM COMPRESSED MMSE WEIGHT MATRIX  │
└────────────────────────────┘
             │
┌────────────────────────────┐
│    PERFORM CHANNEL ESTIMATION    │
│ BY MULTIPLYING ORIGINAL MMSE WEIGHT │── S450
│       MATRIX AND DEPATTERNED       │
│     RECEIVED SIGNAL TOGETHER.      │
└────────────────────────────┘
             │
            END
```

EP 4 568 197 A1

**Description**

BACKGROUND

The present disclosure relates generally to channel estimation, and more particularly, to a method and apparatus for performing channel estimation in a wireless communication system.

In new radio (NR), a terminal device may use a physical downlink shared channel (PDSCH) demodulation reference signal (DMRS) for channel estimation of a PDSCH. One code division multiplexing (CDM) group may include several layers, and the layers may have different orthogonal cover codes (OCCs). In channels with high frequency selectivity, orthogonality by OCC may not be guaranteed, and thus, there is a problem in that inter-layer interference may remain after OCC despreading.

The terminal device may perform channel estimation according to a linear minimum mean square error (LMMSE) channel estimation method. However, calculation of LMMSE weights may incur a high computational complexity as the calculation may involve matrix inversion operations and matrix multiplication. Additionally, in a carrier aggregation (CA) situation, a minimum mean square error (MMSE) weight may need to be calculated for each carrier component (CC). As another example, in a multiple input multiple output (MIMO) system, an MMSE weight may need to be calculated for each receiving antenna. Thus, there is a need for a method to reduce computational complexity and the size of memory required to store weights.

SUMMARY

One or more example embodiments of the present disclosure provide a method and apparatus for performing channel estimation by restoring, from a compressed minimum mean square error (MMSE) weight matrix, an original MMSE weight matrix for performing linear minimum mean square error (LMMSE)-based channel estimation without orthogonal cover code (OCC) despreading.

According to an aspect of the present disclosure, a method of operating an electronic device includes receiving, from a base station, a signal including a new radio physical downlink shared channel (NR PDSCH) demodulation reference signal (DMRS), performing depatterning by multiplying the received signal by an orthogonal cover code (OCC) matrix, calculating a compressed minimum mean square error (MMSE) weight matrix, based on the received signal, restoring an original MMSE weight matrix from the calculated compressed MMSE weight matrix, and performing linear MMSE (LMMSE)-based channel estimation based on the original MMSE weight matrix and the depatterned received signal.

According to an aspect of the present disclosure, an electronic device includes a communication circuit configured to receive, from a base station, a signal including a NR PDSCH DMRS, a memory configured to store compressed MMSE weight matrix information, and a processor configured to perform depatterning by multiplying the received signal by an OCC matrix, calculate the compressed MMSE weight matrix according to channel observations of the received signal, restore an original MMSE weight matrix from the calculated compressed MMSE weight matrix, and perform LMMSE-based channel estimation based on the original MMSE weight matrix and the depatterned received signal.

According to an aspect of the present disclosure, a wireless communication system includes a base station configured to transmit, to an electronic device, a PDSCH including a NR PDSCH DMRS, and the electronic device configured to receive, from the base station, a signal including the PDSCH, perform depatterning by multiplying the received signal by an OCC matrix, calculate a compressed MMSE weight matrix based on the received signal, restore an original MMSE weight matrix from the calculated compressed MMSE weight matrix, and perform LMMSE-based channel estimation based on the original MMSE weight matrix and the depatterned received signal.

At least some of the above and other features of the invention are set out in the claims. Additional aspects may be set forth in part in the description which follows and, in part, may be apparent from the description, and/or may be learned by practice of the presented embodiments.

BRIEF DESCRIPTION OF THE DRAWINGS

The above and other aspects, features, and advantages of certain embodiments of the present disclosure may be more apparent from the following description taken in conjunction with the accompanying drawings, in which:

FIG. 1 illustrates a wireless communication system, according to an embodiment;
FIG. 2A illustrates an example of a new radio physical downlink shared channel (NR PDSCH) demodulation reference signal (DMRS) Configuration type 1, according to an embodiment;
FIG. 2B illustrates an example of an NR PDSCH DMRS Configuration type 2, according to an embodiment;
FIG. 3 is a block diagram of an electronic device, according to an embodiment;

FIG. 4 is a flowchart illustrating a method of operating an electronic device, according to an embodiment;

FIG. 5A is a table illustrating a mapping operation corresponding to an NR PDSCH DMRS Configuration type 1, according to an embodiment;

FIG. 5B is a table illustrating a mapping operation corresponding to an NR PDSCH DMRS Configuration type 2, according to an embodiment;

FIG. 6A illustrates an original minimum mean square error (MMSE) weight matrix of the NR PDSCH DMRS Configuration type 1, according to an embodiment;

FIG. 6B illustrates an intermediate MMSE weight matrix of the NR PDSCH DMRS Configuration type 1, according to an embodiment;

FIG. 6C illustrates a compressed MMSE weight matrix of the NR PDSCH DMRS Configuration type 2, according to an embodiment;

FIG. 7 illustrates a multiple input multiple output (MIMO) environment, according to an embodiment; and

FIG. 8 is a block diagram of a wireless communication device, according to an embodiment.

## DETAILED DESCRIPTION OF THE EMBODIMENTS

The following description with reference to the accompanying drawings is provided to assist in a comprehensive understanding of embodiments of the present disclosure defined by the claims and their equivalents. Various specific details are included to assist in understanding, but these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

The terms "first," "second," third" may be used to describe various elements but the elements are not limited by the terms and a "first element" may be referred to as a "second element". Alternatively or additionally, the terms "first", "second", "third", and the like may be used to distinguish components from each other and do not limit the present disclosure. For example, the terms "first", "second", "third", and the like may not necessarily involve an order or a numerical meaning of any form.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings.

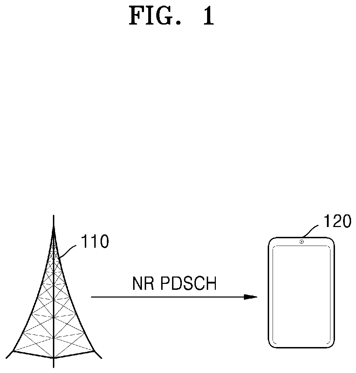

FIG. 1 illustrates a wireless communication system, according to an embodiment.

Referring to FIG. 1, the wireless communication system may include a base station 110 and an electronic device 120.

According to some embodiments, the base station 110 may be and/or may include a network infrastructure that may provide wireless access to the electronic device 120. The base station 110 may have coverage (or a coverage area) that may be defined as a certain geographical area based on a distance over which signals to and/or from the base station may be transmitted and/or received. Throughout the present disclosure, the base station 110 may be referred to as an access point (AP), an eNodeB (eNB), a 5th generation (5G) node, a wireless point, a wireless access point, or other terms having an equivalent technical meaning.

According to some embodiments, the base station 110 may be connected to one or more transmission/reception points (TRPs). The base station 110 may transmit a downlink signal to and/or may receive an uplink signal from the electronic device 120 through the one or more TRPs. According to an embodiment, the base station 110 may transmit a physical channel to the electronic device 120. For example, the physical channel may include at least one of a physical downlink shared channel (PDSCH), a physical broadcast channel (PBCH), or a physical downlink control channel (PDCCH). The physical channel may further include a reference signal (RS). For example, the PDSCH may include a new radio (NR) PDSCH demodulation reference signal (DMRS) (e.g. as defined in the 3rd Generation Partnership Project (3GPP) Technical Specification (TS) 38.211).

The electronic device 120 may perform channel estimation for the physical channel. The channel estimation may be based on a linear minimum mean square error (LMMSE) technique. The electronic device 120 may perform channel estimation for $N_{RE}$ resource elements (REs) included in one or several resource blocks (RBs) by using $N_{RS}$ NR PDSCH DMRS resources (e.g. time-frequency resources), where $N_{RE}$ and $N_{RS}$ are positive integers greater than zero (0). For instance, $N_{RS}$ may be the number of subcarriers assigned to the NR PDSCH DMRS per symbol and per resource block.

According to some embodiments, the electronic device 120 may be and/or may include a device used by a user and may communicate with the base station 110 through a wireless channel. Throughout the present disclosure, the electronic device 120 may be referred to as user equipment (UE), a mobile station, a subscriber station, customer premises equipment (CPE), a remote terminal, a wireless terminal, or a user device, or other terms having an equivalent technical meaning.

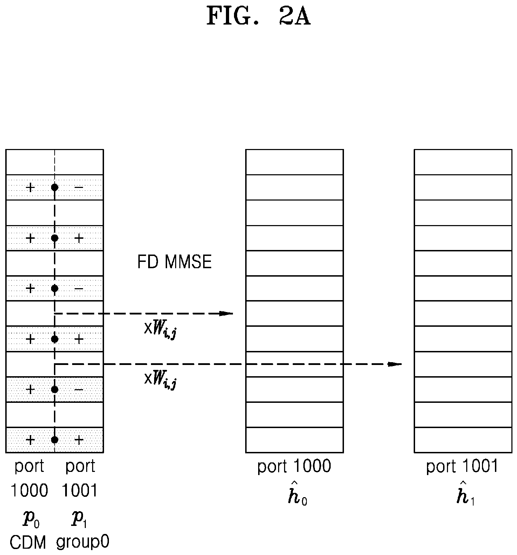

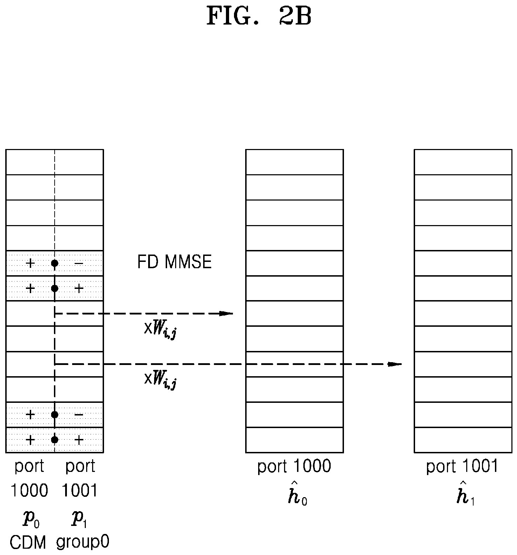

FIG. 2A illustrates an example of an NR PDSCH DMRS Configuration type 1, and FIG. 2B illustrates an example of an NR PDSCH DMRS Configuration type 2. The configuration type may define the frequency density of the DMRS. For instance, configuration type 1 may define six subcarriers per physical resource block (PRB) per antenna port, comprising alternate subcarriers. Configuration type 2 may define four subcarriers per PRB per antenna port, comprising two groups of two consecutive subcarriers.

A physical channel may include RSs. The RSs may be arranged for each resource element (RE) at predetermined intervals along a frequency axis. For example, the RS may include at least one of a DMRS of the NR PDSCH, a DMRS of the NR PDCCH, and a DMRS of the NR PBCH.

Referring to FIGS. 2A and 2B, the structure of an NR PDSCH DMRS in 1RB, one (1) symbol is shown. Because different code division multiplexing (CDM) groups may be orthogonal in a frequency domain, only CDM group 0 may be considered and may be similarly applied to other CDM groups. In the CDM group 0, DMRS signals from port 1000 and port 1001 may be mixed, and each port may be distinguished by orthogonal cover code (OCC) of [+ +] or [+ -].

The electronic device 120 may perform channel estimation for $N_{RE}$ channels by using $N_{RS}$ NR PDSCH DMRS. For example, when frequency domain channel estimation is performed in units of one (1) symbol and 1RB in the NR PDSCH DMRS Configuration type 1, $N_{RS}$ (the number of NR PDSCH DMRS resources) may be set to six (6) (e.g., $N_{RS} = 6$) and $N_{RE}$ (the number of channels) may be set to twelve (12) (e.g., $N_{RE} = 12$). As another example, when frequency domain channel estimation is performed in units of one (1) symbol and 2RB in the NR PDSCH DMRS Configuration type 2, $N_{RS}$ may be set to eight (8) (e.g., $N_{RS} = 8$) and $N_{RE}$ may be set to 24 (e.g., $N_{RE} = 24$).

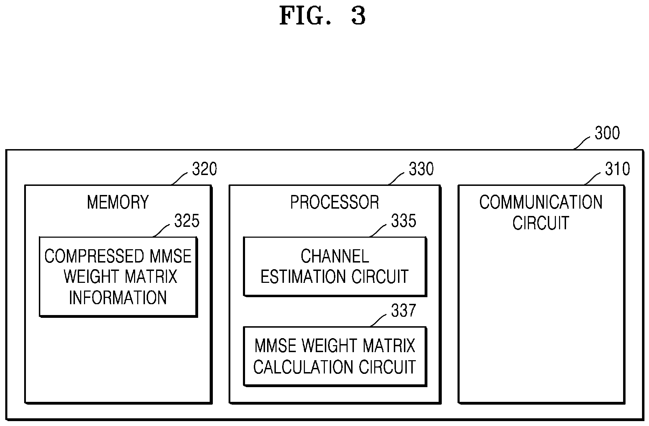

FIG. 3 is a block diagram of an electronic device 300, according to an embodiment.

Referring to FIG. 3, the electronic device 300 may include, a communication circuit 310, a memory 320, and a processor 330. The electronic device 300 of FIG. 3 may include and/or may be similar in many respects to the electronic device 120 described above with reference to FIG. 1, and may include additional features not mentioned above. Consequently, repeated descriptions of the electronic device 300 described above with reference to FIG. 1 may be omitted for the sake of brevity.

According to an embodiment, the communication circuit 310 may perform functions for transmitting and/or receiving signals through a wireless channel. For example, the communication circuit 310 may perform a conversion function between a baseband signal and a bit string according to a physical layer standard of a system. As another example, when transmitting data, the communication circuit 310 may generate complex symbols by encoding and modulating a transmitted bit stream, and, when receiving data, the communication circuit 310 may restore a received bit stream by demodulating and decoding the baseband signal. In addition, the communication circuit 310 may up-convert the baseband signal into a radio frequency (RF) band signal and then transmit the RF band signal through an antenna, and/or may down-convert the RF band signal received through the antenna into a baseband signal. In an embodiment, the communication circuit 310 may include a transmit filter, a receive filter, an amplifier, a mixer, an oscillator, a digital to analog converter (DAC), an analog to digital converter (ADC), and the like. The communication circuit 310 may perform beamforming. That is, the communication circuit 310 may apply a beamforming weight to a signal to be transmitted and/or received in order to give directionality to the signal.

The communication circuit 310 may transmit and/or receive signals. For example, the communication circuit 310 may receive a downlink signal and/or may transmit an uplink signal. The downlink signal may include a synchronization signal (SS), an RS, system information, a configuration message, control information, downlink data, or the like. The communication circuit 310 may receive a downlink physical channel (e.g., NR PDSCH, NR PDCCH, and NR PBCH) including an RS from the base station 110. For example, the communication circuit 310 may receive an NR PDSCH including DMRS.

According to an embodiment, the memory 320 may store data such as, but not limited to, a basic program, an application program, setting information, for operating the electronic device 120. The memory 320 may include volatile memory, non-volatile memory, and/or a combination of volatile memory and non-volatile memory.

The memory 320 may include (e.g., store) compressed minimum mean square error (MMSE) weight matrix information 325. The compressed MMSE weight matrix information 325 may correspond to a matrix calculated in advance and stored in the memory 320. The compressed MMSE weight matrix information 325 stored in the memory 320 may include a reduced-sized matrix for restoring an original MMSE weight matrix that may need to be calculated to perform channel estimation for a received signal. As used herein, the compressed MMSE weight matrix information 325 may be referred to as simplified MMSE weight matrix information, reduced MMSE weight matrix information, partial MMSE weight matrix information, or the like. The compressed MMSE weight matrix information 325 is further described below.

The memory 320 may provide stored data upon request from the processor 330. For example, the memory 320 may provide the compressed MMSE weight matrix information 325 to a channel estimation circuit 335 in response to a request from the channel estimation circuit 335 included in the processor 330.

According to an embodiment, the processor 330 may control operations of the electronic device 300. For example, the processor 330 may control the communication circuit 310 to transmit and/or receive signals to and/or from an external device. For example, the external device may correspond to a base station (e.g., base station 110 of FIG. 1). Additionally, the processor 330 may write data to and/or read data from the memory 320. For example, the processor 330 may pre-calculate the compressed MMSE weight matrix information 325 and store the compressed MMSE weight matrix information 325 in the memory 320. As another example, the processor 330 may read the compressed MMSE weight matrix information 325 from the memory 320 to perform LMMSE-based channel estimation for a received signal. To this end, the processor 330 may include at least one processor or microprocessor, and/or may be part of a processor. When the processor 330 is part of a processor, part of the communication circuit 310 and the processor 330 may be referred to as a communication processor (CP).

According to an embodiment, the processor 330 may include the channel estimation circuit 335 and may further include an MMSE weight matrix calculation circuit 337. The channel estimation circuit 335 may perform LMMSE-based channel estimation on the received signal. In such an embodiment, the received signal may be and/or may include a signal that is not OCC despreaded. That is, the channel estimation circuit 335 may perform LMMSE-based channel estimation on the received signal without separating ports within the same CDM group. The MMSE weight matrix calculation circuit 337 may calculate a weight matrix (e.g. a compressed MMSE weight matrix) based on the LMMSE technique and may store the calculated weight matrix in a memory (e.g., memory 320) (e.g. as compressed MMSE weight matrix information 325). The channel estimation circuit 335 may use the compressed MMSE weight matrix information 325 stored in the memory 320. For example, the channel estimation circuit 335 may obtain compressed MMSE weight matrix information 325 from the memory 320 and restore an original MMSE weight matrix from the compressed MMSE weight matrix information 325. The original MMSE weight matrix may refer to the entire MMSE weight matrix which the MMSE weight matrix calculation circuit 337 has to calculate in order to apply the LMMSE technique to the received signal. The MMSE weight matrix calculation circuit 337 may bypass and/or skip directly calculating the original MMSE weight matrix in order to calculate a weight matrix to be provided to the channel estimation circuit 335 that performs channel estimation based on the LMMSE technique for the received signal, and/or may calculate only the compressed MMSE weight matrix and store the calculated compressed MMSE weight matrix in a memory (e.g., memory 320). The channel estimation circuit 335 may restore the original MMSE weight matrix from the compressed MMSE weight matrix information 325. Consequently, the MMSE weight matrix calculation circuit 337 may reduce computational complexity, when compared to a related electronic device, by not directly calculating the original MMSE weight matrix.

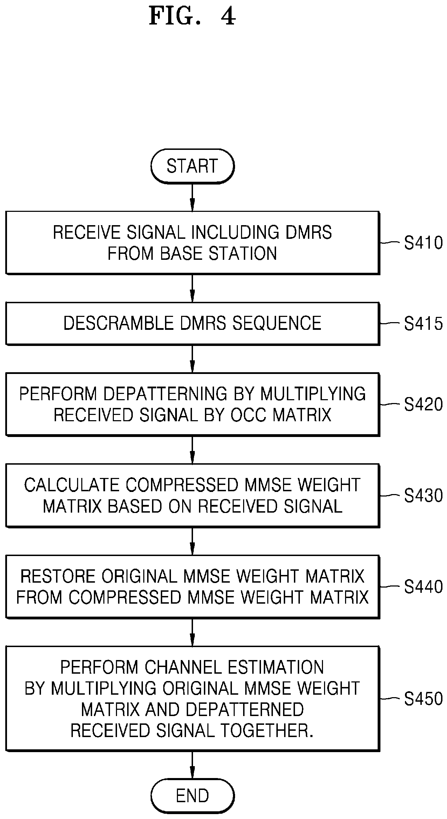

FIG. 4 is a flowchart illustrating a method of operating the electronic device 300, according to an embodiment.

Referring to FIG. 4, in operation S410, the electronic device 300 may receive a signal including DMRS from a base station (e.g., the base station 110 of FIG. 1). The received signal may correspond to the NR PDSCH. The processor 330 may control the communication circuit 310 to receive the NR PDSCH including DMRS. For example, the PDSCH may include six (6) RSs (six subcarriers) in one (1) symbol for every one (1) RB according to the NR PDSCH DMRS Configuration type 1 and/or may include four (4) RSs (four subcarriers) in one (1) symbol for every one (1) RB according to the NR PDSCH DMRS Configuration type 2. Additionally, the NR PDSCH DMRS may be multiplexed and transmitted according to OCC.

In operation S415, the electronic device 300 may descramble a DMRS sequence.

In operation S420, the electronic device 300 may perform depatterning (e.g. descrambling, or OCC conversion) by multiplying the received signal by an OCC matrix. The depatterning may correspond to multiplying the received signal by an OCC pattern corresponding to each port without performing OCC despreading of the received signal. According to an embodiment, a received signal for which descrambling has been completed may be represented as an equation similar to Equation 1.

[Equation 1]

$$y = \mathbf{X}_0 \mathbf{p}_0 + \mathbf{X}_1 \mathbf{p}_1 + \mathbf{n}$$

Referring to Equation 1, $\mathbf{p}_l \in \mathbb{C}^{N_{RS} \times 1}$ may represent the channel of port $l$ at the NR PDSCH DMRS RE location, $\mathbf{n} \sim \mathcal{CN}(\mathbf{0}, \sigma^2 I_{N_{RS}})$ may represent a Gaussian noise, and $\mathbf{X}_l$ may represent the OCC matrix of port $l$. For example, in the case of NR PDSCH DMRS, a Walsh code may be used, and thus, the OCC matrices may be expressed as $\mathbf{X}_0 = I_{N_{RS}}$, and $\mathbf{X}_1 = \mathrm{diag}([1, -1, \cdots, 1, -1])$. $I_{N_{RS}}$ may be an identity matrix of size $N_{RS}$ (e.g. an $N_{RS} \times N_{RS}$ identity matrix).

In operation S430, the electronic device 300 may calculate a compressed MMSE weight matrix based on the received signal. For example, the MMSE weight matrix calculation circuit 337 may calculate a compressed MMSE weight matrix based on the signal to noise ratio (SINR) and power delay profile (PDP) measured based on the received signal. In particular, the MMSE weight matrix calculation circuit 337 may obtain a frequency correlation $r(k)$ from the PDP, calculate an auto-covariance matrix $\mathbf{R}_{p,p}$ and a cross-covariance matrix $\mathbf{R}_{h,p}$ based on the frequency correlation $r(k)$, and calculate a compressed MMSE weight matrix based on the auto-covariance matrix $\mathbf{R}_{p,p}$ and the cross-covariance matrix $\mathbf{R}_{h,p}$.

According to an NR telecommunication standard (e.g. 3GPP TS 38.214), a PRB bundle size may be set to 2, 4, or Wideband by a base station (e.g., the base station 110 in FIG. 1), and one PRB bundle may include only 1RB depending on PDSCH allocation. Therefore, channel estimation operations in units of 1RB, 2RB, 4RB, and nRB may be representatively considered, where n is a positive integer greater than zero (0). The unit of channel estimation may not necessarily be an nRB unit operation, and within one (1) PRB bundle, the unit of channel estimation may be expanded to channel estimation for an arbitrary number of REs with an arbitrary number of RSs.

According to an embodiment, in the case of the NR PDSCH DMRS Configuration type 1, the channels to be estimated and RS vectors according to various PRB bundle sizes may be as shown in Table 1. Additionally, the virtual channel and RS vectors for calculating a compressed MMSE weight matrix according to various PRB bundle sizes may be as shown in Table 1. $\mathbf{h}$ is an RS channel vector, $\mathbf{p}$ is an RB channel vector, $\mathbf{h}_r$ is a reduced RS channel vector and $\mathbf{p}_r$ is a reduced RB channel vector.

Table 1: NR PDSCH DMRS Configuration Type 1

| | $\mathbf{W}$ | | $\mathbf{W}^{(\text{Reduced})}$ | |
|---|---|---|---|---|
| 1RB | $\mathbf{h} = \begin{bmatrix} h_0 \\ h_1 \\ \vdots \\ h_{11} \end{bmatrix}$ | $\mathbf{p} = \begin{bmatrix} p_0 \\ p_1 \\ \vdots \\ p_5 \end{bmatrix}$ | $\mathbf{h}_r = \begin{bmatrix} h_{-3} \\ h_{-2} \\ \vdots \\ h_4 \end{bmatrix}$ | $\mathbf{p}_r = \begin{bmatrix} p_0 \\ p_2 \\ p_4 \end{bmatrix}$ |
| 2RB | $\mathbf{h} = \begin{bmatrix} h_0 \\ h_1 \\ \vdots \\ h_{23} \end{bmatrix}$ | $\mathbf{p} = \begin{bmatrix} p_0 \\ p_1 \\ \vdots \\ p_{11} \end{bmatrix}$ | $\mathbf{h}_r = \begin{bmatrix} h_{-3} \\ h_{-2} \\ \vdots \\ h_{10} \end{bmatrix}$ | $\mathbf{p}_r = \begin{bmatrix} p_0 \\ p_2 \\ \vdots \\ p_{10} \end{bmatrix}$ |

(continued)

| | $W$ | | $W^{(\text{Reduced})}$ | |
|---|---|---|---|---|
| 4RB | $\boldsymbol{h} = \begin{bmatrix} h_0 \\ h_1 \\ \vdots \\ h_{47} \end{bmatrix}$, | $\boldsymbol{p} = \begin{bmatrix} p_0 \\ p_1 \\ \vdots \\ p_{23} \end{bmatrix}$ | $\boldsymbol{h}_r = \begin{bmatrix} h_{-3} \\ h_{-2} \\ \vdots \\ h_{22} \end{bmatrix}$, | $\boldsymbol{p}_r = \begin{bmatrix} p_0 \\ p_2 \\ \vdots \\ p_{22} \end{bmatrix}$ |
| nRB | $\boldsymbol{h} = \begin{bmatrix} h_0 \\ h_1 \\ \vdots \\ h_{12n-1} \end{bmatrix}$, | $\boldsymbol{p} = \begin{bmatrix} p_0 \\ p_1 \\ \vdots \\ p_{6n-1} \end{bmatrix}$ | $\boldsymbol{h}_r = \begin{bmatrix} h_{-3} \\ h_{-2} \\ \vdots \\ h_{6n-2} \end{bmatrix}$, | $\boldsymbol{p}_r = \begin{bmatrix} p_0 \\ p_2 \\ \vdots \\ p_{6n-2} \end{bmatrix}$ |

For example, when the configuration of the DMRS is the NR PDSCH DMRS Configuration type 1 and the PRB bundle size is 1RB, the channel estimation circuit 335 may use only channel observations of three (3) channels $\boldsymbol{p}_r$, which may be half the size, instead of six (6) channels $\boldsymbol{p}$ for all DMRS REs. Additionally, the channel estimation circuit 335 may use only channel observations of eight (8) channels $\boldsymbol{h}_r$ of some size instead of twelve (12) channels $\boldsymbol{h}$ for all REs. The MMSE weight matrix calculation circuit 337 may put the obtained channel observations of $\boldsymbol{h}_r$ and $\boldsymbol{p}_r$ into the compressed MMSE weight matrix information 325 to obtain a compressed MMSE weight matrix $W^{(\text{Reduced})}$.

According to an embodiment, in the case of the NR PDSCH DMRS Configuration type 2, the channels to be estimated and RS vectors according to various PRB bundle sizes may be as shown in Table 2. Additionally, the virtual channel and RS vectors for calculating a compressed MMSE weight matrix according to various PRB bundle sizes may be as shown in Table 2.

Table 2: NR PDSCH DMRS Configuration Type 2

| | $W$ | | $W^{(\text{Reduced})}$ | |
|---|---|---|---|---|
| 1RB | $\boldsymbol{h} = \begin{bmatrix} h_0 \\ h_1 \\ \vdots \\ h_{11} \end{bmatrix}$, | $\boldsymbol{p} = \begin{bmatrix} p_0 \\ p_1 \\ p_2 \\ p_3 \end{bmatrix}$ | $\boldsymbol{h}_r = \begin{bmatrix} h_{-5} \\ h_{-4} \\ \vdots \\ h_3 \end{bmatrix}$, | $\boldsymbol{p}_r = \begin{bmatrix} p_0 \\ p_2 \end{bmatrix}$ |
| 2RB | $\boldsymbol{h} = \begin{bmatrix} h_0 \\ h_1 \\ \vdots \\ h_{23} \end{bmatrix}$, | $\boldsymbol{p} = \begin{bmatrix} p_0 \\ p_1 \\ \vdots \\ p_7 \end{bmatrix}$ | $\boldsymbol{h}_r = \begin{bmatrix} h_{-5} \\ h_{-4} \\ \vdots \\ h_9 \end{bmatrix}$, | $\boldsymbol{p}_r = \begin{bmatrix} p_0 \\ p_2 \\ p_4 \\ p_6 \end{bmatrix}$ |
| 4RB | $\boldsymbol{h} = \begin{bmatrix} h_0 \\ h_1 \\ \vdots \\ h_{47} \end{bmatrix}$, | $\boldsymbol{p} = \begin{bmatrix} p_0 \\ p_1 \\ \vdots \\ p_{15} \end{bmatrix}$ | $\boldsymbol{h}_r = \begin{bmatrix} h_{-5} \\ h_{-4} \\ \vdots \\ h_{21} \end{bmatrix}$, | $\boldsymbol{p}_r = \begin{bmatrix} p_0 \\ p_2 \\ \vdots \\ p_{14} \end{bmatrix}$ |
| nRB | $\boldsymbol{h} = \begin{bmatrix} h_0 \\ h_1 \\ \vdots \\ h_{12n-1} \end{bmatrix}$, | $\boldsymbol{p} = \begin{bmatrix} p_0 \\ p_1 \\ \vdots \\ p_{4n-1} \end{bmatrix}$ | $\boldsymbol{h}_r = \begin{bmatrix} h_{-5} \\ h_{-4} \\ \vdots \\ h_{6n-3} \end{bmatrix}$, | $\boldsymbol{p}_r = \begin{bmatrix} p_0 \\ p_2 \\ \vdots \\ p_{4n-2} \end{bmatrix}$ |

For example, when the configuration of the DMRS is the NR PDSCH DMRS Configuration type 2 and the PRB bundle size is 1RB, the channel estimation circuit 335 may use only channel observations of two (2) channels $\boldsymbol{p}_r$, which are half the size, instead of four (4) channels $\boldsymbol{p}$ for all DMRS REs. Additionally, the channel estimation circuit 335 may use only channel observations of nine (9) channels $\boldsymbol{h}_r$ of some size instead of 12 channels $\boldsymbol{h}$ for all REs. The weight matrix calculation circuit 337 may put the obtained channel observations of $h_r$ and $p_r$ into the compressed MMSE weight matrix information 325 to obtain a compressed MMSE weight matrix $W^{(Reduced)}$.

In operation S440, the electronic device 300 may restore an original MMSE weight matrix $W$ from the compressed MMSE weight matrix $W^{(Reduced)}$. The channel estimation circuit 335 does not directly calculate the original MMSE weight matrix $W$ but may obtain the original MMSE weight matrix $W$ by performing only a predefined mapping operation on the compressed MMSE weight matrix $W^{(Reduced)}$ obtained in operation S430. The predefined mapping operation is described below.

For example, when the configuration of the DMRS is the NR PDSCH DMRS Configuration type 1 and the PRB bundle size is 1RB, the compressed MMSE weight matrix $W^{(Reduced)}$ may be represented as an equation similar to Equation 2.

[Equation 2]

$$
W^{(Reduced)} = \begin{bmatrix}
w_{0,0}^{(Reduced)} & w_{0,1}^{(Reduced)} & w_{0,2}^{(Reduced)} \\
w_{1,0}^{(Reduced)} & w_{1,1}^{(Reduced)} & w_{1,2}^{(Reduced)} \\
w_{2,0}^{(Reduced)} & w_{2,1}^{(Reduced)} & w_{2,2}^{(Reduced)} \\
w_{3,0}^{(Reduced)} & w_{3,1}^{(Reduced)} & w_{3,2}^{(Reduced)} \\
w_{4,0}^{(Reduced)} & w_{4,1}^{(Reduced)} & w_{4,2}^{(Reduced)} \\
w_{5,0}^{(Reduced)} & w_{5,1}^{(Reduced)} & w_{5,2}^{(Reduced)} \\
w_{6,0}^{(Reduced)} & w_{6,1}^{(Reduced)} & w_{6,2}^{(Reduced)} \\
w_{7,0}^{(Reduced)} & w_{7,1}^{(Reduced)} & w_{7,2}^{(Reduced)}
\end{bmatrix}
$$

According to various embodiments, the original MMSE weight matrix $W$ restored based on the compressed MMSE weight matrix $W^{(Reduced)}$ may be represented as an equation similar to Equation 3.

[Equation 3]

$W$

$$
= \begin{bmatrix}
w_{3,0}^{(Reduced)} & w_{1,0}^{(Reduced)} & w_{3,1}^{(Reduced)} & w_{1,1}^{(Reduced)} & w_{3,2}^{(Reduced)} & w_{1,2}^{(Reduced)} \\
w_{4,0}^{(Reduced)} & w_{2,0}^{(Reduced)} & w_{4,1}^{(Reduced)} & w_{2,1}^{(Reduced)} & w_{4,2}^{(Reduced)} & w_{2,2}^{(Reduced)} \\
w_{5,0}^{(Reduced)} & w_{3,0}^{(Reduced)} & w_{5,1}^{(Reduced)} & w_{3,1}^{(Reduced)} & w_{5,2}^{(Reduced)} & w_{3,2}^{(Reduced)} \\
w_{6,0}^{(Reduced)} & w_{4,0}^{(Reduced)} & w_{6,1}^{(Reduced)} & w_{4,1}^{(Reduced)} & w_{6,2}^{(Reduced)} & w_{4,2}^{(Reduced)} \\
w_{7,0}^{(Reduced)} & w_{5,0}^{(Reduced)} & w_{7,1}^{(Reduced)} & w_{5,1}^{(Reduced)} & w_{6,2}^{(Reduced)} & w_{5,2}^{(Reduced)} \\
\left(w_{6,2}^{(Reduced)}\right)^* & w_{6,0}^{(Reduced)} & \left(w_{6,1}^{(Reduced)}\right)^* & w_{6,1}^{(Reduced)} & \left(w_{6,0}^{(Reduced)}\right)^* & w_{6,2}^{(Reduced)} \\
\left(w_{5,2}^{(Reduced)}\right)^* & w_{7,0}^{(Reduced)} & \left(w_{5,1}^{(Reduced)}\right)^* & w_{7,1}^{(Reduced)} & \left(w_{5,0}^{(Reduced)}\right)^* & w_{7,2}^{(Reduced)} \\
\left(w_{4,2}^{(Reduced)}\right)^* & \left(w_{6,2}^{(Reduced)}\right)^* & \left(w_{4,1}^{(Reduced)}\right)^* & \left(w_{6,1}^{(Reduced)}\right)^* & \left(w_{4,0}^{(Reduced)}\right)^* & \left(w_{6,0}^{(Reduced)}\right)^* \\
\left(w_{3,2}^{(Reduced)}\right)^* & \left(w_{5,2}^{(Reduced)}\right)^* & \left(w_{3,1}^{(Reduced)}\right)^* & \left(w_{5,1}^{(Reduced)}\right)^* & \left(w_{3,0}^{(Reduced)}\right)^* & \left(w_{5,0}^{(Reduced)}\right)^* \\
\left(w_{2,2}^{(Reduced)}\right)^* & \left(w_{4,2}^{(Reduced)}\right)^* & \left(w_{2,1}^{(Reduced)}\right)^* & \left(w_{4,1}^{(Reduced)}\right)^* & \left(w_{2,0}^{(Reduced)}\right)^* & \left(w_{4,0}^{(Reduced)}\right)^* \\
\left(w_{1,2}^{(Reduced)}\right)^* & \left(w_{3,2}^{(Reduced)}\right)^* & \left(w_{1,1}^{(Reduced)}\right)^* & \left(w_{3,1}^{(Reduced)}\right)^* & \left(w_{1,0}^{(Reduced)}\right)^* & \left(w_{3,0}^{(Reduced)}\right)^* \\
\left(w_{0,2}^{(Reduced)}\right)^* & \left(w_{2,2}^{(Reduced)}\right)^* & \left(w_{0,1}^{(Reduced)}\right)^* & \left(w_{2,1}^{(Reduced)}\right)^* & \left(w_{0,0}^{(Reduced)}\right)^* & \left(w_{2,0}^{(Reduced)}\right)^*
\end{bmatrix}
$$

In the above, ($W_{i,j}^{(Reduced)}$) may be the complex conjugate of the (i, j) -th element of the compressed MMSE weight matrix $W^{(Reduced)}$. The original MMSE weight matrix $W$ in Equation 3 described above may be based on mapping corresponding to the case where the configuration of the DMRS is the NR PDSCH DMRS Configuration type 1 and the PRB bundle size is 1RB, but the same may be applied in the case of the NR PDSCH DMRS Configuration type 2 and/or PRB bundle sizes of 2RB, 4RB, and nRB except that the size of the matrix may be different.

That is, the electronic device 300 may calculate only the compressed MMSE weight matrix $W^{(Reduced)}$ based on channel observation of the received signal and may then restore the original MMSE weight matrix $W$ by directly putting the elements of the compressed MMSE weight matrix $W^{(Reduced)}$ into the original MMSE weight matrix $W$ or putting the complex conjugate number of the elements of the compressed MMSE weight matrix $W^{(Reduced)}$ into the original MMSE weight matrix $W$.

In operation S450, the electronic device 300 may perform channel estimation by multiplying the original MMSE weight matrix $W$ and a depatterned received signal together. For example, the original MMSE weight matrix $W$ may be obtained in operation S440.

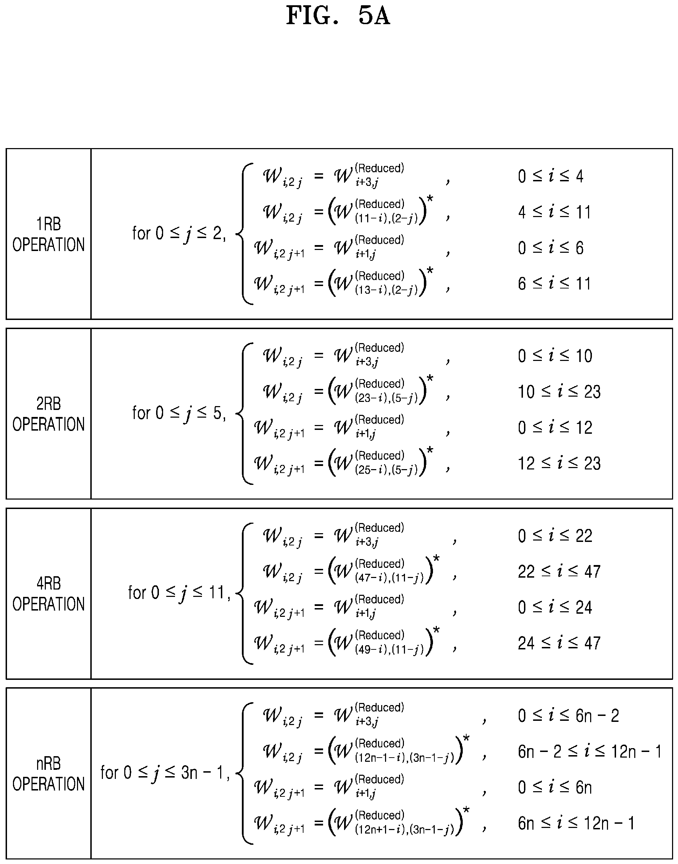

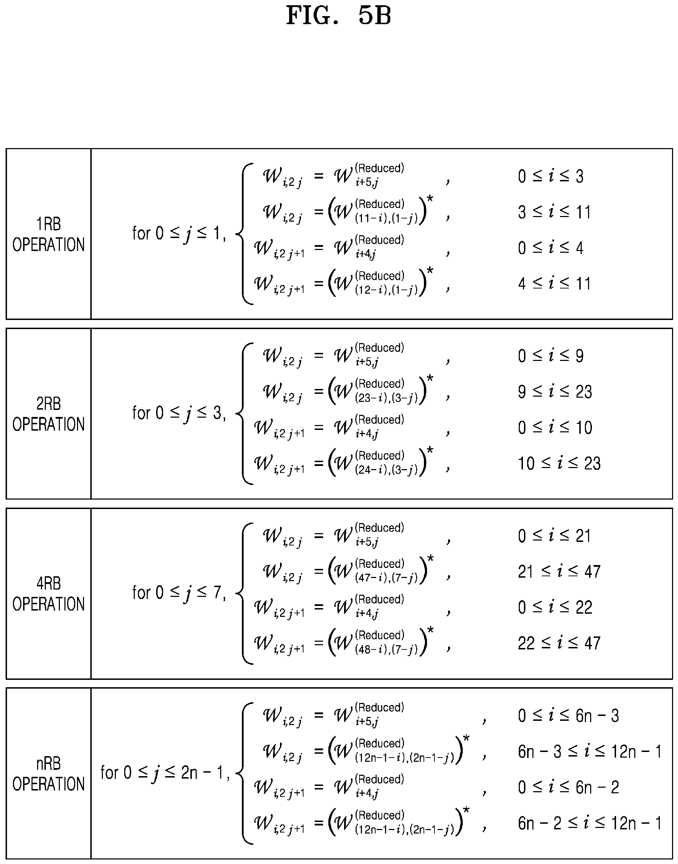

FIG. 5A is a table illustrating a mapping operation corresponding to an NR PDSCH DMRS Configuration type 1, according to an embodiment. FIG. 5B is a table illustrating a mapping operation corresponding to an NR PDSCH DMRS Configuration type 2, according to an embodiment.

Before describing FIGS. 5A and 5B, the process of deriving a mapping operation between an original MMSE weight matrix and a compressed MMSE weight matrix is described. According to various embodiments, the result of channel estimation based on the LMMSE technique may be represented as an equation similar to Equation 4.

[Equation 4]

$$\hat{\mathbf{h}}_l = \mathbb{E}[\mathbf{h}_l\mathbf{y}^H]\mathbb{E}[\mathbf{y}\mathbf{y}^H]$$

$$= \mathbf{R}_{h,p}\left(\mathbf{R}_{p,p} + \mathbf{X}_1\mathbf{R}_{p,p}\mathbf{X}_1^H + \sigma^2 I_{N_{RS}}\right)^{-1} \cdot \mathbf{X}_l^H\mathbf{y} = \mathbf{R}_{h,p}\mathbf{R}^{-1} \cdot \mathbf{X}_l^H\mathbf{y}$$

Referring to Equation 4, H may represent a Hermitian operator, $R_{h,p}$ may represent the cross-covariance matrix of $h_l$ and $p_l$, and $R_{p,p}$ may represent the auto-covariance matrix of $p_l$. From Equation 4, it may be understood that in order to calculate the MMSE weight matrix, $W = R_{h,p}R^{-1}$ may need to be calculated.

The cases of the NR PDSCH DMRS Configuration type 1 and the NR PDSCH DMRS Configuration type 2 are separately described. First, it may be assumed the NR PDSCH DMRS Configuration type 1 and a PRB bundle size of 1RB. In such a case, $N_{RS} = 6$ and $N_{RE} = 12$.

Referring to Equation 4, $R = R_{p,p} + X_1R_{p,p}X_1^H + \sigma^2 I_{N_{RS}}$ and the auto-covariance matrix required to calculate $R$ may be represented as an equation similar to Equation 5.

[Equation 5]

$$\mathbf{R}_{p,p} = \begin{bmatrix} r(0) & r(2)^* & r(4)^* & r(6)^* & r(8)^* & r(10)^* \\ r(2) & r(0) & r(2)^* & r(4)^* & r(6)^* & r(8)^* \\ r(4) & r(2) & r(0) & r(2)^* & r(4)^* & r(6)^* \\ r(6) & r(4) & r(2) & r(0) & r(2)^* & r(4)^* \\ r(8) & r(6) & r(4) & r(2) & r(0) & r(2)^* \\ r(10) & r(8) & r(6) & r(4) & r(2) & r(0) \end{bmatrix}$$

Referring to Equation 5, $r(k)$ may represent the frequency correlation of the $(n + k)$th subcarrier channel and the $(n)$th subcarrier channel. That is, $r(k) = E[h_{n+k}h_n^*]$ and $r(-k) = r(k)^*$. $r(k)$ may be obtained from an equation similar to Equation 6 by a PDP.

[Equation 6]

$$r(k) = \sum_{i=0}^{L-1} P_i e^{-j2\pi k \Delta f \tau_i}$$

Referring to Equation 6, $L$ may represent the number of channel paths, $j$ may represent an imaginary number (the square route of -1), $P_i$ and $\tau_i$ may represent the power and delay of the $i$th channel path, respectively, and $\Delta f$ may represent the subcarrier spacing.

Additionally, the $X_1 R_{p,p} X_1^H$ term of $R$ may be represented as an equation similar to Equation 7.

[Equation 7]

$$\mathbf{X_1 R_{p,p} X_1^H} = \begin{bmatrix} r(0) & -r(2)^* & r(4)^* & -r(6)^* & r(8)^* & -r(10)^* \\ -r(2) & r(0) & -r(2)^* & r(4)^* & -r(6)^* & r(8)^* \\ r(4) & -r(2) & r(0) & -r(2)^* & r(4)^* & -r(6)^* \\ -r(6) & r(4) & -r(2) & r(0) & -r(2)^* & r(4)^* \\ r(8) & -r(6) & r(4) & -r(2) & r(0) & -r(2)^* \\ -r(10) & r(8) & -r(6) & r(4) & -r(2) & r(0) \end{bmatrix}$$

Calculating $R$ by using Equation 6 and Equation 7, $R$ may be represented as an equation similar to Equation 8.

[Equation 8]

$$\mathbf{R} = \begin{bmatrix} 2+\sigma^2 & 0 & 2r(4)^* & 0 & 2r(8)^* & 0 \\ 0 & 2+\sigma^2 & 0 & 2r(4)^* & 0 & 2r(8)^* \\ 2r(4) & 0 & 2+\sigma^2 & 0 & 2r(4)^* & 0 \\ 0 & 2r(4) & 0 & 2+\sigma^2 & 0 & 2r(4)^* \\ 2r(8) & 0 & 2r(4) & 0 & 2+\sigma^2 & 0 \\ 0 & 2r(8) & 0 & 2r(4) & 0 & 2+\sigma^2 \end{bmatrix}$$

Referring to the puncture pattern in Equation 8, because the 2×2 identity matrix is common, $R$ may be represented as equations similar to Equations 9 and 10.

[Equation 9]

$$\mathbf{R} = \begin{bmatrix} (2+\sigma^2)\begin{bmatrix} 1 & 0 \\ 0 & 1 \end{bmatrix} & 2r(4)^*\begin{bmatrix} 1 & 0 \\ 0 & 1 \end{bmatrix} & 2r(8)^*\begin{bmatrix} 1 & 0 \\ 0 & 1 \end{bmatrix} \\ 2r(4)\begin{bmatrix} 1 & 0 \\ 0 & 1 \end{bmatrix} & (2+\sigma^2)\begin{bmatrix} 1 & 0 \\ 0 & 1 \end{bmatrix} & 2r(4)^*\begin{bmatrix} 1 & 0 \\ 0 & 1 \end{bmatrix} \\ 2r(8)\begin{bmatrix} 1 & 0 \\ 0 & 1 \end{bmatrix} & 2r(4)\begin{bmatrix} 1 & 0 \\ 0 & 1 \end{bmatrix} & (2+\sigma^2)\begin{bmatrix} 1 & 0 \\ 0 & 1 \end{bmatrix} \end{bmatrix}$$

[Equation 10]

$$\mathbf{R} = \begin{bmatrix} 2+\sigma^2 & 2r(4)^* & 2r(8)^* \\ 2r(4) & 2+\sigma^2 & 2r(4)^* \\ 2r(8) & 2r(4) & 2+\sigma^2 \end{bmatrix} \otimes \begin{bmatrix} 1 & 0 \\ 0 & 1 \end{bmatrix}$$

Referring to Equation 10, the $\otimes$ operator may represent a Kronecker product operation. As such, the inverse matrix of the Kronecker product may be expressed as $((A \otimes B)^{-1} = A^{-1} \otimes B^{-1})$, and thus, $R^{-1}$ may be calculated by an equation similar to Equation 11.

[Equation 11]

$$\mathbf{R}^{-1} = \begin{bmatrix} 2 + \sigma^2 & 2r(4)^* & 2r(8)^* \\ 2r(4) & 2 + \sigma^2 & 2r(4)^* \\ 2r(8) & 2r(4) & 2 + \sigma^2 \end{bmatrix}^{-1} \otimes \begin{bmatrix} 1 & 0 \\ 0 & 1 \end{bmatrix}$$

According to Equation 6, r(0) = 1, and thus, Equation 11 may be rewritten as an equation similar to Equation 12.

[Equation 12]

$$\mathbf{R}^{-1} = \begin{bmatrix} 2r(0) + \sigma^2 & 2r(4)^* & 2r(8)^* \\ 2r(4) & 2r(0) + \sigma^2 & 2r(4)^* \\ 2r(8) & 2r(4) & 2r(0) + \sigma^2 \end{bmatrix}^{-1} \otimes \begin{bmatrix} 1 & 0 \\ 0 & 1 \end{bmatrix}$$

Referring to Equation 12, r(0), r(4), and r(8) are repeated in Equation 12, and thus, when $\boldsymbol{p_r} = [p_0\, p_2\, p_4]^T$ is applied in order to reduce the matrix size, all elements of $\boldsymbol{R}^{-1}$ may be obtained from Equation 11 after calculating $R_{p_r}^{-1} = (2R_{p_r,p_r} + \sigma^2 I_3)^{-1}$.

According to an embodiment, $\boldsymbol{R}^{-1}$ of Equation 12 may be expressed as the Kronecker product of $\boldsymbol{Q}$ and the identity matrix and represented as an equation similar to Equation 13.

[Equation 13]

$$\mathbf{R}^{-1} = \mathbf{Q} \otimes \begin{bmatrix} 1 & 0 \\ 0 & 1 \end{bmatrix} = \begin{bmatrix} q_{0,0} & 0 & q_{0,1} & 0 & q_{0,2} & 0 \\ 0 & q_{0,0} & 0 & q_{0,1} & 0 & q_{0,2} \\ q_{1,0} & 0 & q_{1,1} & 0 & q_{1,2} & 0 \\ 0 & q_{1,0} & 0 & q_{1,1} & 0 & q_{1,2} \\ q_{2,0} & 0 & q_{2,1} & 0 & q_{2,2} & 0 \\ 0 & q_{2,0} & 0 & q_{2,1} & 0 & q_{2,2} \end{bmatrix}$$

Referring to Equation 13, $q_{i,j}$ may represent the (i,j) element of $\boldsymbol{Q}$.

Because $\boldsymbol{R}^{-1}$ may be obtained according to the process described above, $\boldsymbol{R_{h,p}}$ needed to obtain $\boldsymbol{W} = \boldsymbol{R_{h,p}} \boldsymbol{R}^{-1}$ may be the cross-covariance matrix and may be represented as an equation similar to Equation 14.

[Equation 14]

$$\mathbf{R_{h,p}} = \begin{bmatrix} \mathbf{R}_{h_0,\mathbf{p}} \\ \mathbf{R}_{h_1,\mathbf{p}} \\ \mathbf{R}_{h_2,\mathbf{p}} \\ \mathbf{R}_{h_3,\mathbf{p}} \\ \vdots \\ \mathbf{R}_{h_{10},\mathbf{p}} \\ \mathbf{R}_{h_{11},\mathbf{p}} \end{bmatrix} = \begin{bmatrix} r(0) & r(-2) & r(-4) & r(-6) & r(-8) & r(-10) \\ r(1) & r(-1) & r(-3) & r(-5) & r(-7) & r(-9) \\ r(2) & r(0) & r(-2) & r(-4) & r(-6) & r(-8) \\ r(3) & r(1) & r(-1) & r(-3) & r(-5) & r(-7) \\ r(4) & r(2) & r(0) & r(-2) & r(-4) & r(-6) \\ & & & \vdots & & \\ r(10) & r(8) & r(6) & r(4) & r(2) & r(0) \\ r(11) & r(9) & r(7) & r(5) & r(3) & r(1) \end{bmatrix}$$

$\boldsymbol{W_i} = \boldsymbol{R}_{h_i,\boldsymbol{p}} \boldsymbol{R}^{-1}$, which is the *i*th row, may be represented as an equation similar to Equation 15.

[Equation 15]

$$\mathbf{R}_{h_i,p}\mathbf{R}^{-1} = \begin{bmatrix} r(i) \\ r(i-2) \\ r(i-4) \\ r(i-6) \\ r(i-8) \\ r(i-10) \end{bmatrix}^T \cdot \begin{bmatrix} q_{0,0} & 0 & q_{0,1} & 0 & q_{0,2} & 0 \\ 0 & q_{0,0} & 0 & q_{0,1} & 0 & q_{0,2} \\ q_{1,0} & 0 & q_{1,1} & 0 & q_{1,2} & 0 \\ 0 & q_{1,0} & 0 & q_{1,1} & 0 & q_{1,2} \\ q_{2,0} & 0 & q_{2,1} & 0 & q_{2,2} & 0 \\ 0 & q_{2,0} & 0 & q_{2,1} & 0 & q_{2,2} \end{bmatrix} = \begin{bmatrix} \mathbf{f}(i) \cdot \mathbf{q}_0 \\ \mathbf{f}(i-2) \cdot \mathbf{q}_0 \\ \mathbf{f}(i) \cdot \mathbf{q}_1 \\ \mathbf{f}(i-2) \cdot \mathbf{q}_1 \\ \mathbf{f}(i) \cdot \mathbf{q}_2 \\ \mathbf{f}(i-2) \cdot \mathbf{q}_2 \end{bmatrix}^T$$

Referring to Equation 15, $\mathbf{f}(i) = [r(i)\,r(i\text{-}4)\,r(i\text{-}8)]$ and $\mathbf{q}_i$ is the $i$th column of $\mathbf{Q}$, that is, $\mathbf{Q} = [\mathbf{q}_0\,\mathbf{q}_1\,\mathbf{q}_2]$. Other rows may be calculated similarly, and $\mathbf{W} = \mathbf{R}_{h,p}\mathbf{R}^{-1}$ may be represented as an equation similar to Equation 16.

[Equation 16]

$$\mathbf{W} = \begin{cases} \mathbf{W}_{i,2j} = \mathbf{f}(i) \cdot \mathbf{q}_j \\ \mathbf{W}_{i,2j+1} = \mathbf{f}(i-2) \cdot \mathbf{q}_j \end{cases} \text{for } 0 \le i \le 11, 0 \le j \le 2$$

According to an embodiment, DMRS REs may be determined to be located at regular intervals according to the NR PDSCH DMRS Configuration type, and accordingly, there may be overlapping values between adjacent columns of $\mathbf{W}$.
For example, referring to Equation 3, when the element entry of $\mathbf{W}$ is expressed as $(i,j)(0 \le i \le 11, 0 \le j \le 5)$, some elements ($\mathbf{W}_{0,0}$ to $\mathbf{W}_{9,0}$) in the 0th column may appear the same in the neighboring 1st column. By reducing the number of columns by using the characteristic of overlapping values between adjacent columns, an equation similar to Equation 17 may be obtained.

[Equation 17]

$$\mathbf{W}' = \begin{bmatrix} \mathbf{f}(-2) \\ \mathbf{f}(-1) \\ \mathbf{f}(0) \\ \vdots \\ \mathbf{f}(9) \\ \mathbf{f}(10) \\ \mathbf{f}(11) \end{bmatrix} \cdot [\mathbf{q}_0\ \mathbf{q}_1\ \mathbf{q}_2]$$

That is, the $(i, j)$ entry of $\mathbf{W}'$ may be represented as an equation similar to Equation 18.

[Equation 18]

$$\mathbf{W}'_{i,j} = \mathbf{f}(i-2) \cdot \mathbf{q}_j$$

Referring to Equations 16 and 18 together, each entry in $\mathbf{W}$ may be expressed as an entry in $\mathbf{W}'$ by an equation similar to Equation 19.

[Equation 19]

$$\begin{cases} \mathbf{W}_{i,2j} = \mathbf{f}(i) \cdot \mathbf{q}_j = \mathbf{W}'_{(i+2),j} \\ \mathbf{W}_{i,2j+1} = \mathbf{f}(i-2) \cdot \mathbf{q}_j = \mathbf{W}'_{i,j} \end{cases} \text{for } 0 \le i \le 11, 0 \le j \le 2$$

According to an embodiment, $\mathbf{h}' = [\mathbf{h}_\Delta^T\ \mathbf{h}^T]^T$ and $\mathbf{h}_\Delta$ is a virtual channel vector determined according to the RS form. When $\mathbf{h} = [h_0\,h_1\cdots h_{N_{RE}}]^T$, the virtual channel vector may be represented as $\mathbf{h}_\Delta = [h_{-\alpha}\cdots h_{-1}]^T$. As used herein, $\alpha$ may represent the interval between the 0th RS and the 1st RS. For the NR PDSCH DMRS Configuration type 1, $\alpha = 2$, and for the NR PDSCH DMRS Configuration type 2, $\alpha = 1$. That is, for convenience of explanation, the NR PDSCH DMRS Configuration type 1 may be assumed, and thus, $\boldsymbol{h'} = [h_{-2}\, h_{-1} \cdots h_{11}]^T$ and all elements of $\boldsymbol{W}$ may be obtained from Equation 19 after calculating only $W' = R_{h',p_r} R_{p_r}^{-1}$ .

According to an embodiment, DMRS RE may have symmetrical properties in the frequency axis regardless of the NR PDSCH DMRS Configuration type. For example, half (e.g., 0th RE to 5th RE) of 1RB may be symmetrical to the other half (e.g., 6th RE to 11th RE) of 1RB. Based on the symmetrical properties, a specific row may exhibit characteristics corresponding to the form of taking the conjugate complex number after reversing the order of another row.

For example, referring to Equation 3, when the element entry of $\boldsymbol{W}$ is expressed as $(i, j)(0 \leq i \leq 11, 0 \leq j \leq 5)$, when the elements ($W_{0,0}$ to $W_{0,5}$) of the 0th row are flipped (e.g. reversed) and the complex conjugate number is taken, the result may become the same as the elements ($W_{10,0}$ to $W_{10,5}$) of the 10th row. By reducing the number of rows based on the symmetrical properties of DMRS RE, an equation similar to Equation 20 may be obtained. That is, the column-reduced and row-reduced matrix $\boldsymbol{W}^{(\text{Reduced})}$ may be represented as an equation similar to Equation 20.

[Equation 20]

$$\mathbf{W}^{(\text{Reduced})} = \begin{bmatrix} \mathbf{f}(-3) \\ \mathbf{f}(-2) \\ \mathbf{f}(-1) \\ \mathbf{f}(0) \\ \mathbf{f}(1) \\ \mathbf{f}(2) \\ \mathbf{f}(3) \\ \mathbf{f}(4) \end{bmatrix} \cdot [\mathbf{q}_0 \ \mathbf{q}_1 \ \mathbf{q}_2]$$

That is, the $(i, j)$ entry of $\boldsymbol{W}^{(\text{Reduced})}$ may be represented as an equation similar to Equation 21.

[Equation 21]

$$\mathbf{W}_{i,j}^{(\text{Reduced})} = \mathbf{f}(i - 3) \cdot \mathbf{q}_j$$

Each entry in $\boldsymbol{W'}$ may be obtained from the entry in $W_{i,j}^{(\text{Reduced})}$ , and the properties of $\boldsymbol{Q}$ may be used to obtain the entry. From Equation 11 above, it may be understood that the inverse matrix of $\boldsymbol{Q}$ may be Hermitian and may have persymmetric properties, and therefore, Q may also be Hermitian and may have persymmetric properties. That is, using $q_{i,j} = q_{(2-j),(2-i)} = q_{(2-i),(2-j)}^*$ , an equation similar to Equation 22 may be obtained.

[Equation 22]

$$\mathbf{W}_{i,j}' = \mathbf{f}(i - 2) \cdot \mathbf{q}_j = r(i - 2) \cdot q_{0,j} + r(i - 2 - 4) \cdot q_{1,j} + r(i - 2 - 8) \cdot q_{2,j}$$

$$= \left( r(2 - i) \cdot q_{0,j}^* + r(4 + 2 - i) \cdot q_{1,j}^* + r(8 + 2 - i) \cdot q_{2,j}^* \right)^*$$

$$= \left( r(2 - i) \cdot q_{2,2-j} + r(6 - i) \cdot q_{1,2-j} + r(10 - i) \cdot q_{0,2-j} \right)^*$$

$$= (\mathbf{f}(10 - i) \cdot \mathbf{q}_{2-j})^* = (\mathbf{W}_{(13-i),(2-j)}^{(\text{Reduced})})^*$$

Therefore, each entry in $\boldsymbol{W'}$ may be expressed as an entry in $W_{i,j}^{(\text{Reduced})}$ and represented using an equation similar to Equation 23.

[Equation 23]

$$\begin{cases} \mathbf{W}'_{i,j} = \mathbf{f}(i-2) \cdot \mathbf{q}_j = \mathbf{W}^{(\text{Reduced})}_{i+1,j} & \text{for } 0 \leq i \leq 6, \\ \mathbf{W}'_{i,j} = \mathbf{f}(i-2) \cdot \mathbf{q}_j = \mathbf{W}^{(\text{Reduced})}_{(13-i),(2-j)} & \text{for } 7 \leq i \leq 13 \end{cases}$$

Referring to Equations 19 and 23 together, even-numbered columns and odd-numbered columns may be classified as shown in Table 3.

Table 3: Even and Odd Columns of W

| Even column of **W**, $0 \leq j \leq 2$ | Odd column of **W**, $0 \leq j \leq 2$ |
|---|---|
| $\begin{cases} \mathbf{W}_{i,2j} = \mathbf{W}^{(\text{Reduced})}_{(i+3),j} & \text{for } 0 \leq i \leq 4 \\ \mathbf{W}_{i,2j} = \left(\mathbf{W}^{(\text{Reduced})}_{(11-i),(2-j)}\right)^* & \text{for } 5 \leq i \leq 11 \end{cases}$ | $\begin{cases} \mathbf{W}_{i,2j+1} = \mathbf{W}^{(\text{Reduced})}_{(i+1),j} & \text{for } 0 \leq i \leq 6 \\ \mathbf{W}_{i,2j+1} = \left(\mathbf{W}^{(\text{Reduced})}_{(13-i),(2-j)}\right)^* & \text{for } 7 \leq i \leq 11 \end{cases}$ |

According to an embodiment, a virtual channel vector may be represented as $\boldsymbol{h_r} = [h_{-\beta} \; h_{-\beta+1} \cdots h_{(N_{RE}-\beta-1)/2}]^T$, where $\beta$ is the interval between the $(N_{RS}$ - 2)th RS and the $(N_{RE}$ - 1)th RE. By reducing $\boldsymbol{h'}$ to $\boldsymbol{h_r}$, the number of rows that need to be calculated may be reduced. For the NR PDSCH DMRS Configuration type 1, $\beta = 3$, and for the NR PDSCH DMRS Configuration type 2, $\beta = 5$. That is, for convenience of explanation, NR PDSCH DMRS Configuration type 1 may be assumed, and thus, $\boldsymbol{h_r} = [h_{-3} \; h_{-2} \cdots h_4]^T$ and all elements of $\boldsymbol{W}$ may be obtained from Table 3 after calculating only $\boldsymbol{W}^{(\text{Reduced})} = \boldsymbol{R}_{h_r,p_r}\boldsymbol{R}_{p_r}^{-1}$.

According to various embodiments, the equations described above may be generalized to nRB, and when the interval between the 0th RS and the 2nd RS is $\gamma$, Equation 24 may be satisfied for $0 \leq j \leq \frac{N_{RE}}{\gamma} - 1$. For NR PDSCH DMRS Configuration type 1, $\gamma = 4$, and for NR PDSCH DMRS Configuration type 2, $\gamma = 6$.

[Equation 24]

$$\begin{cases} \mathbf{W}_{i,2j} = \mathbf{W}^{(\text{Reduced})}_{i+\beta,j} & , & 0 \leq i \leq \frac{N_{RE}}{2} - \frac{\beta+1}{2} \\ \mathbf{W}_{i,2j} = \left(\mathbf{W}^{(\text{Reduced})}_{(N_{RE}+\beta-\gamma-i),(\frac{N_{RE}}{\gamma}-1-j)}\right)^* & , & \frac{N_{RE}}{2} - \frac{\beta+1}{2} < i \leq N_{RE} - 1 \\ \mathbf{W}_{i,2j+1} = \mathbf{W}^{(\text{Reduced})}_{i+\beta-\alpha,j} & , & 0 \leq i \leq \frac{N_{RE}}{2} - \frac{\beta+1}{2} + \alpha \\ \mathbf{W}_{i,2j+1} = \left(\mathbf{W}^{(\text{Reduced})}_{(N_{RE}+\alpha+\beta-\gamma-i),(\frac{N_{RE}}{\gamma}-1-j)}\right)^* & , & \frac{N_{RE}}{2} - \frac{\beta+1}{2} + \alpha < i \leq N_{RE} - 1 \end{cases}$$

Referring to Equation 24, $\alpha$ may represent the interval between the 0th RS and the 1st RS, $\beta$ may represent the interval between the $(N_{RS}$ - 2)th RS and the $(N_{RE}$ - 1)th RE, and $\gamma$ may represent the interval between the 0th RS and the 2nd RS. $N_{RE}$ may be the number of REs included in one (1) PRB bundle, and thus, may be equal to 12n, for example.

Referring to FIGS. 5A and 5B, the table in FIG. 5A includes all the results of substituting corresponding values into Equation 24 from 1RB operation to nRB operation in the case of the NR PDSCH DMRS Configuration type 1, and the table in FIG. 5B includes all the results of substituting corresponding values into Equation 24 from 1RB operation to nRB operation in the case of the NR PDSCH DMRS Configuration type 2.

According to various embodiments, the NR PDSCH DMRS Configuration type and PRB bundle size may be changed. Assuming NR PDSCH DMRS Configuration type 2 and a PRB bundle size of 2RB, $N_{RS} = 8$ and $N_{RE} = 24$.

Referring to Equation 4, $R = R_{p,p} + X_1 R_{p,p} X_1^H + \sigma^2 I_{N_P}$ and the auto-covariance matrix required to calculate $\boldsymbol{R}$ may be represented as an equation similar to Equation 25.

[Equation 25]

$$\mathbf{R_{p,p}} = \begin{bmatrix} r(0) & r(1)^* & r(6)^* & r(7)^* & r(12)^* & r(13)^* & r(18)^* & r(19)^* \\ r(1) & r(0) & r(5)^* & r(6)^* & r(11)^* & r(12)^* & r(17)^* & r(18)^* \\ r(6) & r(5) & r(0) & r(1)^* & r(6)^* & r(7)^* & r(12)^* & r(13)^* \\ r(7) & r(6) & r(1) & r(0) & r(5)^* & r(6)^* & r(11)^* & r(12)^* \\ r(12) & r(11) & r(6) & r(5) & r(0) & r(1)^* & r(6)^* & r(7)^* \\ r(13) & r(12) & r(7) & r(6) & r(1) & r(0) & r(5)^* & r(6)^* \\ r(18) & r(17) & r(12) & r(11) & r(6) & r(5) & r(0) & r(1)^* \\ r(19) & r(18) & r(13) & r(12) & r(7) & r(6) & r(1) & r(0) \end{bmatrix}$$

Additionally, the $X_1 R_{p,p} X_1^H$ term of $R$ may be represented as an equation similar to Equation 26.

[Equation 26]

$$\mathbf{X_1 R_{p,p} X_1^H} = \begin{bmatrix} r(0) & -r(1)^* & r(6)^* & -r(7)^* & r(12)^* & -r(13)^* & r(18)^* & -r(19)^* \\ -r(1) & r(0) & -r(5)^* & r(6)^* & -r(11)^* & r(12)^* & -r(17)^* & r(18)^* \\ r(6) & -r(5) & r(0) & -r(1)^* & r(6)^* & -r(7)^* & r(12)^* & -r(13)^* \\ -r(7) & r(6) & -r(1) & r(0) & -r(5)^* & r(6)^* & -r(11)^* & r(12)^* \\ r(12) & -r(11) & r(6) & -r(5) & r(0) & -r(1)^* & r(6)^* & -r(7)^* \\ -r(13) & r(12) & -r(7) & r(6) & -r(1) & r(0) & -r(5)^* & r(6)^* \\ r(18) & -r(17) & r(12) & -r(11) & r(6) & -r(5) & r(0) & -r(1)^* \\ -r(19) & r(18) & -r(13) & r(12) & -r(7) & r(6) & -r(1) & r(0) \end{bmatrix}$$

Calculating $R$ by using Equations 25 and 26, $R$ may be represented as an equation similar to Equation 27.

[Equation 27]

$$\mathbf{R} = \begin{bmatrix} 2+\sigma^2 & 0 & 2r(6)^* & 0 & 2r(12)^* & 0 & 2r(18)^* & 0 \\ 0 & 2+\sigma^2 & 0 & 2r(6)^* & 0 & 2r(12)^* & 0 & 2r(18)^* \\ 2r(6) & 0 & 2+\sigma^2 & 0 & 2r(6)^* & 0 & 2r(12)^* & 0 \\ 0 & 2r(6) & 0 & 2+\sigma^2 & 0 & 2r(6)^* & 0 & 2r(12)^* \\ 2r(12) & 0 & 2r(6) & 0 & 2+\sigma^2 & 0 & 2r(6)^* & 0 \\ 0 & 2r(12) & 0 & 2r(6) & 0 & 2+\sigma^2 & 0 & 2r(6)^* \\ 2r(18) & 0 & 2r(12) & 0 & 2r(6) & 0 & 2+\sigma^2 & 0 \\ 0 & 2r(18) & 0 & 2r(12) & 0 & 2r(6) & 0 & 2+\sigma^2 \end{bmatrix}$$

Referring to the puncture pattern in Equation 27, because the 2×2 identity matrix is common, $R$ may be represented as equations similar to Equations 28 and 29.

[Equation 28]

$$\mathbf{R} = \begin{bmatrix} (2+\sigma^2)\begin{bmatrix}1 & 0\\0 & 1\end{bmatrix} & 2r(6)^*\begin{bmatrix}1 & 0\\0 & 1\end{bmatrix} & 2r(12)^*\begin{bmatrix}1 & 0\\0 & 1\end{bmatrix} & 2r(18)^*\begin{bmatrix}1 & 0\\0 & 1\end{bmatrix} \\ 2r(6)\begin{bmatrix}1 & 0\\0 & 1\end{bmatrix} & (2+\sigma^2)\begin{bmatrix}1 & 0\\0 & 1\end{bmatrix} & 2r(6)^*\begin{bmatrix}1 & 0\\0 & 1\end{bmatrix} & 2r(12)^*\begin{bmatrix}1 & 0\\0 & 1\end{bmatrix} \\ 2r(12)\begin{bmatrix}1 & 0\\0 & 1\end{bmatrix} & 2r(6)\begin{bmatrix}1 & 0\\0 & 1\end{bmatrix} & (2+\sigma^2)\begin{bmatrix}1 & 0\\0 & 1\end{bmatrix} & 2r(6)^*\begin{bmatrix}1 & 0\\0 & 1\end{bmatrix} \\ 2r(18)\begin{bmatrix}1 & 0\\0 & 1\end{bmatrix} & 2r(12)\begin{bmatrix}1 & 0\\0 & 1\end{bmatrix} & 2r(6)\begin{bmatrix}1 & 0\\0 & 1\end{bmatrix} & (2+\sigma^2)\begin{bmatrix}1 & 0\\0 & 1\end{bmatrix} \end{bmatrix}$$

[Equation 29]

$$\mathbf{R} = \begin{bmatrix} 2+\sigma^2 & 2r(6)^* & 2r(12)^* & 2r(18)^* \\ 2r(6) & 2+\sigma^2 & 2r(6)^* & 2r(12)^* \\ 2r(12) & 2r(6) & 2+\sigma^2 & 2r(6)^* \\ 2r(18) & 2r(12) & 2r(6) & 2+\sigma^2 \end{bmatrix} \otimes \begin{bmatrix}1 & 0\\0 & 1\end{bmatrix}$$

Referring to Equation 29, the $\otimes$ operator may represent a Kronecker product. It is known that the inverse matrix of the Kronecker product may be expressed as $((A \otimes B)^{-1} = A^{-1} \otimes B^{-1})$, and thus, $\boldsymbol{R}^{-1}$ may be calculated by an equation similar to Equation 30.

[Equation 30]

$$\mathbf{R}^{-1} = \begin{bmatrix} 2+\sigma^2 & 2r(6)^* & 2r(12)^* & 2r(18)^* \\ 2r(6) & 2+\sigma^2 & 2r(6)^* & 2r(12)^* \\ 2r(12) & 2r(6) & 2+\sigma^2 & 2r(6)^* \\ 2r(18) & 2r(12) & 2r(6) & 2+\sigma^2 \end{bmatrix}^{-1} \otimes \begin{bmatrix}1 & 0\\0 & 1\end{bmatrix}$$

According to Equation 6, r(0) = 1, and thus, Equation 30 may be rewritten as an equation similar to Equation 31.

[Equation 31]

$$\mathbf{R}^{-1} = \begin{bmatrix} 2r(0)+\sigma^2 & 2r(6)^* & 2r(12)^* & 2r(18)^* \\ 2r(6) & 2r(0)+\sigma^2 & 2r(6)^* & 2r(12)^* \\ 2r(12) & 2r(6) & 2r(0)+\sigma^2 & 2r(6)^* \\ 2r(18) & 2r(12) & 2r(6) & 2r(0)+\sigma^2 \end{bmatrix}^{-1} \otimes \begin{bmatrix}1 & 0\\0 & 1\end{bmatrix}$$

r(0), r(6), r(12), and r(18) are repeated in Equation 31, and thus, when $\boldsymbol{p_r} = [p_0\ p_2\ p_4\ p_6]^T$ is applied in order to reduce the matrix size, all elements of $R_{p_r}^{-1} = (2R_{p_r,p_r} + \sigma^2 I_4)^{-1}$ may be obtained from Equation 30 after calculating $R_{p_r}^{-1} = (2R_{p_r,p_r} + \sigma^2 I_4)^{-1}$.

According to an embodiment, $\mathbf{R}^{-1}$ of Equation 31 may be expressed as the Kronecker product of $\boldsymbol{Q}$ and the identity matrix as in Equation 32.

[Equation 32]

$$\mathbf{R}^{-1} = \mathbf{Q} \otimes \begin{bmatrix} 1 & 0 \\ 0 & 1 \end{bmatrix} = \begin{bmatrix} q_{0,0} & 0 & q_{0,1} & 0 & q_{0,2} & 0 & q_{0,3} & 0 \\ 0 & q_{0,0} & 0 & q_{0,1} & 0 & q_{0,2} & 0 & q_{0,3} \\ q_{1,0} & 0 & q_{1,1} & 0 & q_{1,2} & 0 & q_{1,3} & 0 \\ 0 & q_{1,0} & 0 & q_{1,1} & 0 & q_{1,2} & 0 & q_{1,3} \\ q_{2,0} & 0 & q_{2,1} & 0 & q_{2,2} & 0 & q_{2,3} & 0 \\ 0 & q_{2,0} & 0 & q_{2,1} & 0 & q_{2,2} & 0 & q_{2,3} \\ q_{3,0} & 0 & q_{3,1} & 0 & q_{3,2} & 0 & q_{3,3} & 0 \\ 0 & q_{3,0} & 0 & q_{3,1} & 0 & q_{3,2} & 0 & q_{3,3} \end{bmatrix}$$

Referring to Equation 32, $q_{i,j}$ is the $(i, j)$ element of $q_{i,j}$.

Because $\mathbf{R}^{-1}$ may be obtained according to the process described above, $\mathbf{R}_{h,p}$ that may be needed to obtain $\mathbf{W} = \mathbf{R}_{h,p}\mathbf{R}^{-1}$ may be the cross-covariance matrix and may be represented as an equation similar to Equation 33.

[Equation 33]

$$\mathbf{R}_{h,p} = \begin{bmatrix} \mathbf{R}_{h_0,p} \\ \mathbf{R}_{h_1,p} \\ \mathbf{R}_{h_2,p} \\ \mathbf{R}_{h_3,p} \\ \vdots \\ \mathbf{R}_{h_{10},p} \\ \mathbf{R}_{h_{11},p} \end{bmatrix} = \begin{bmatrix} r(0) & r(-1) & r(-6) & r(-7) & r(-12) & r(-13) & r(-18) & r(-19) \\ r(1) & r(0) & r(-5) & r(-6) & r(-11) & r(-12) & r(-17) & r(-18) \\ r(2) & r(1) & r(-4) & r(-5) & r(-10) & r(-11) & r(-16) & r(-17) \\ r(3) & r(2) & r(-3) & r(-4) & r(-9) & r(-10) & r(-15) & r(-16) \\ r(4) & r(3) & r(-2) & r(-3) & r(-8) & r(-9) & r(-14) & r(-15) \\ & & & & \vdots & & & \\ r(22) & r(21) & r(16) & r(15) & r(10) & r(9) & r(4) & r(3) \\ r(23) & r(22) & r(17) & r(16) & r(11) & r(10) & r(5) & r(4) \end{bmatrix}$$

$W_i = \mathbf{R}_{h_i,p}\mathbf{R}^{-1}$, which is the $i$th row, may be represented as an equation similar to Equation 34.

[Equation 34]

$$\mathbf{R}_{h_i,p}\mathbf{R}^{-1} = \begin{bmatrix} r(i) \\ r(i-1) \\ r(i-6) \\ r(i-7) \\ r(i-12) \\ r(i-13) \\ r(i-18) \\ r(i-19) \end{bmatrix}^T \cdot \begin{bmatrix} q_{0,0} & 0 & q_{0,1} & 0 & q_{0,2} & 0 & q_{0,3} & 0 \\ 0 & q_{0,0} & 0 & q_{0,1} & 0 & q_{0,2} & 0 & q_{0,3} \\ q_{1,0} & 0 & q_{1,1} & 0 & q_{1,2} & 0 & q_{1,3} & 0 \\ 0 & q_{1,0} & 0 & q_{1,1} & 0 & q_{1,2} & 0 & q_{1,3} \\ q_{2,0} & 0 & q_{2,1} & 0 & q_{2,2} & 0 & q_{2,3} & 0 \\ 0 & q_{2,0} & 0 & q_{2,1} & 0 & q_{2,2} & 0 & q_{2,3} \\ q_{3,0} & 0 & q_{3,1} & 0 & q_{3,2} & 0 & q_{3,3} & 0 \\ 0 & q_{3,0} & 0 & q_{3,1} & 0 & q_{3,2} & 0 & q_{3,3} \end{bmatrix}$$

$$= \begin{bmatrix} \mathbf{f}(i) \cdot \mathbf{q}_0 \\ \mathbf{f}(i-1) \cdot \mathbf{q}_0 \\ \mathbf{f}(i) \cdot \mathbf{q}_1 \\ \mathbf{f}(i-1) \cdot \mathbf{q}_1 \\ \mathbf{f}(i) \cdot \mathbf{q}_2 \\ \mathbf{f}(i-1) \cdot \mathbf{q}_2 \\ \mathbf{f}(i) \cdot \mathbf{q}_3 \\ \mathbf{f}(i-1) \cdot \mathbf{q}_3 \end{bmatrix}^T$$

Referring to Equation 34, $f(i) = [r(i)\ r(i-6)\ r(i-12)\ r(i-18)]$ and $q_i$ is the $i$th column of $\mathbf{Q}$, that is, $\mathbf{Q} = [q_0\ q_1\ q_2\ q_3]$.

Other rows may be calculated similarly and $W = R_{h,p}R^{-1}$ may be represented as an equation similar to Equation 35.

[Equation 35]

$$\begin{cases} \mathbf{W}_{i,2j} = \mathbf{f}(i) \cdot \mathbf{q}_j \\ \mathbf{W}_{i,2j+1} = \mathbf{f}(i-1) \cdot \mathbf{q}_j \end{cases} \text{ for } 0 \leq i \leq 23, 0 \leq j \leq 3$$

According to an embodiment, DMRS REs may be determined to be located at regular intervals according to the NR PDSCH DMRS Configuration type, and accordingly, there may be overlapping values between adjacent columns of $W$. Additionally, DMRS RE may have symmetrical properties in the frequency axis regardless of the NR PDSCH DMRS Configuration type. For example, half (e.g., 0th RE to 5th RE) of 1RB may be symmetrical to the other half (e.g., 6th RE to 11th RE) of 1RB. Based on the symmetrical properties, a specific row may exhibit characteristics corresponding to the form of taking the conjugate complex number after reversing the order of another row. The process of reducing the number of rows and columns may be the same as described above and thus is omitted for the sake of brevity. The column-reduced and row-reduced matrix $W^{(Reduced)}$ may be represented as an equation similar to Equation 36.

[Equation 36]

$$\mathbf{W}^{(\text{Reduced})} = \begin{bmatrix} \mathbf{f}(-5) \\ \mathbf{f}(-4) \\ \mathbf{f}(-3) \\ \mathbf{f}(-2) \\ \vdots \\ \mathbf{f}(6) \\ \mathbf{f}(7) \\ \mathbf{f}(8) \\ \mathbf{f}(9) \end{bmatrix} \cdot [\mathbf{q}_0 \ \mathbf{q}_1 \ \mathbf{q}_2 \ \mathbf{q}_3]$$

That is, the ($i$, $j$) entry of $W^{(Reduced)}$ may be represented as an equation similar to Equation 37.

[Equation 37]

$$\mathbf{W}_{i,j}^{(\text{Reduced})} = \mathbf{f}(i-5) \cdot \mathbf{q}_j$$

The even-numbered columns and odd-numbered columns of $W$ may be classified as shown in Table 4.

Table 4: Even and Odd Columns of W

| Even column of W, $0 \leq j \leq 3$ | Odd column of W, $0 \leq j \leq 3$ |
|---|---|
| $\begin{cases} \mathbf{W}_{i,2j} = \mathbf{W}_{(i+5),j}^{(\text{Reduced})} \text{ for } 0 \leq i \leq 9 \\ \mathbf{W}_{i,2j} = \left(\mathbf{W}_{(23-i),(3-j)}^{(\text{Reduced})}\right)^{*} \text{ for } 10 \leq i \leq 23 \end{cases}$ | $\begin{cases} \mathbf{W}_{i,2j+1} = \mathbf{W}_{(i+4),j}^{(\text{Reduced})} \text{ for } 0 \leq i \leq 10 \\ \mathbf{W}_{i,2j+1} = \left(\mathbf{W}_{(24-i),(3-j)}^{(\text{Reduced})}\right)^{*} \text{ for } 11 \leq i \leq 23 \end{cases}$ |

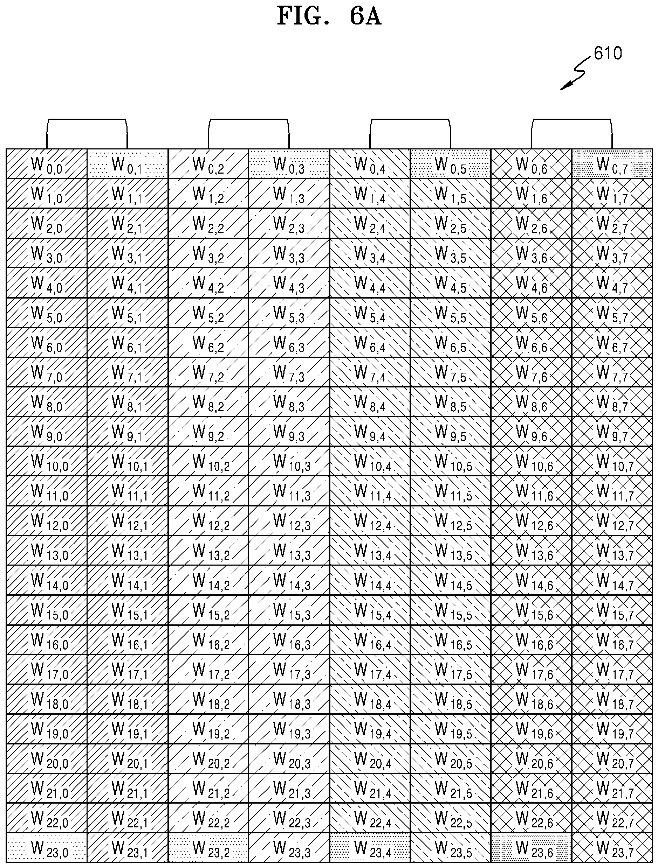

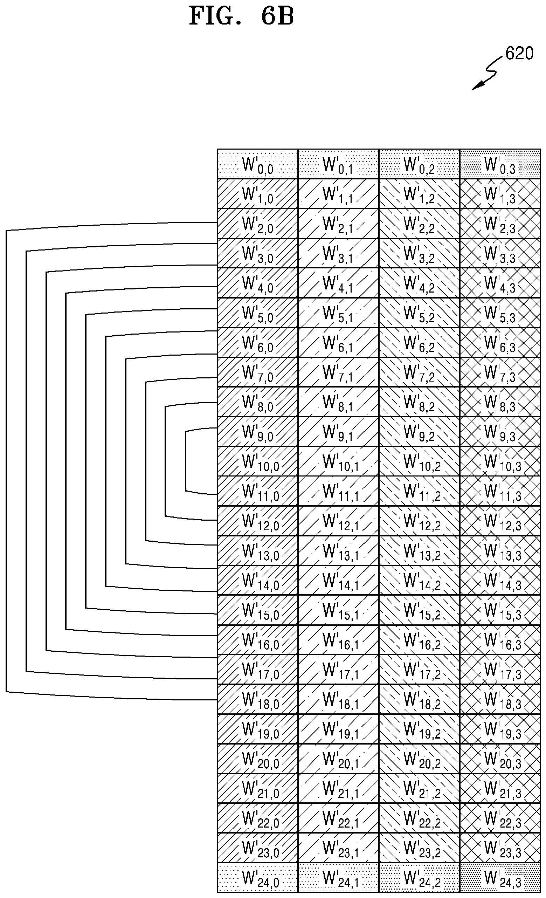

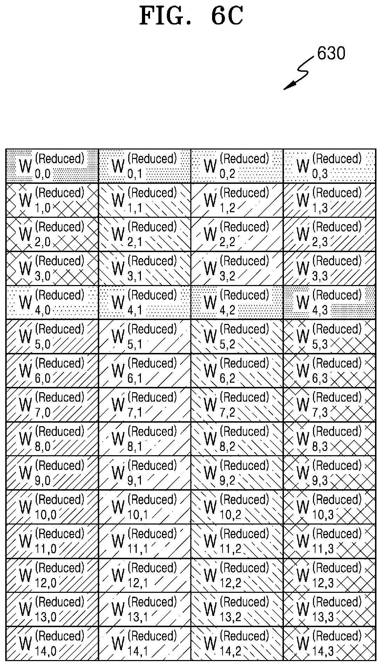

FIG. 6A illustrates an original MMSE weight matrix 610, according to an embodiment. FIG. 6B illustrates an intermediate MMSE weight matrix 620, according to an embodiment. FIG. 6C illustrates a compressed MMSE weight matrix 630, according to an embodiment.

FIGS. 6A to 6C illustrates MMSE weight matrices when the PRB bundle size is 2RB and the configuration of the DMRS is the NR PDSCH DMRS Configuration type 1. Referring to FIG. 6A, the original MMSE weight matrix 610 may include characteristics in which the same value may be shared between adjacent columns. For example, the 0th element to the 22nd element of the 0th column may have the same value as the 1st element to the 23rd element of the 1st column adjacent to the 0th column. Additionally, features containing the same value may be repeated not only between the 0th column and the 1st column but also between two adjacent columns (e.g., 2nd and 3rd columns, 4th and 5th columns, and 6th and 7th columns). Therefore, the original MMSE weight matrix 610 may be restored even when the number of columns is reduced by half according to Equation 19. When the number of columns of the original MMSE weight matrix 610 of FIG. 6A is reduced by half, the original MMSE weight matrix 610 may be converted into the intermediate MMSE weight matrix 620 of FIG. 6B. However, by considering that different values are included between adjacent columns, the number of rows may be increased by one.

Referring to FIG. 6B, the intermediate MMSE weight matrix 620 may include characteristics in which, when elements are flipped between rows spaced apart from each other and the complex conjugate number is taken, the result becomes the same as the intermediate MMSE weight matrix 620. For example, the elements of the 0th row may be the same as those of the 20th row when the elements of the 0th row are flipped and the complex conjugate number is taken. In addition to the 0th row and the 20th row, each of the 1st to 9th rows may have the above characteristics, and each of the 1st to 9th rows may be connected to a row corresponding to the characteristics with line in FIG. 6B. For example, referring to FIG. 6B, the elements of the 1st row may be the same as those of the 19th row when the elements of the 1th row are flipped and the complex conjugate number is taken. Therefore, by using the above characteristics, the intermediate MMSE weight matrix 620 may be restored even when the number of rows is reduced. When reducing the number of rows of the intermediate MMSE weight matrix 620 of FIG. 6B, the intermediate MMSE weight matrix 620 may be converted into the compressed MMSE weight matrix 630 of FIG. 6C.

That is, after the channel estimation circuit 335 calculates the compressed MMSE weight matrix 630 of FIG. 6C based on channel observation of a received signal, the channel estimation circuit 335 may restore the intermediate MMSE weight matrix 620 of FIG. 6B by restoring omitted rows in the compressed MMSE weight matrix 630 based on the characteristics in which, when elements are flipped and the complex conjugate number is taken, the result becomes the same as the intermediate MMSE weight matrix 620. The channel estimation circuit 335 may restore the original MMSE weight matrix 610 of FIG. 6A by restoring omitted columns in the intermediate MMSE weight matrix 620 based on the characteristics in which the same value is shared between adjacent columns.

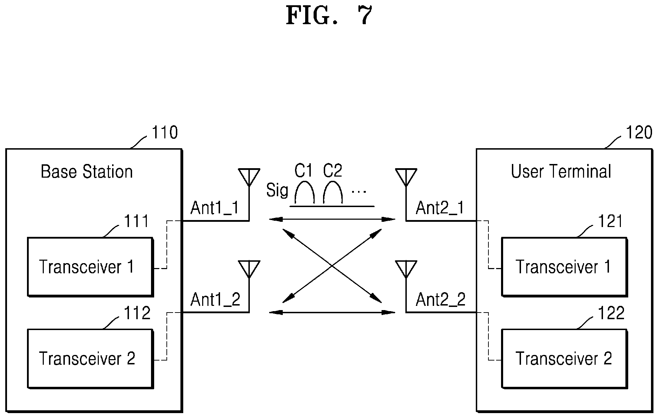

FIG. 7 illustrates a multiple input multiple output (MIMO) environment, according to an embodiment.

Referring to FIG. 7, a base station 110 and an electronic device 120 (e.g., a user terminal) may communicate with each other using a MIMO method. To this end, the base station 110 and the electronic device 120 may include a plurality of antennas (e.g., a first antenna Ant1_1, a second antenna Ant1_2, a third antenna Ant2_1, and a fourth antenna Ant2_2), respectively. Although FIG. 7 illustrates that the base station 110 and the electronic device 120 each include two antennas (e.g., the first antenna Ant1_1 and the second antenna Ant1_2, and the third antenna Ant2_1 and the fourth antenna Ant2_2, respectively), the present disclosure is not limited thereto. The present disclosure may also be applied to an embodiment in which each of the base station 110 and the electronic device 120 includes two or more antennas.

The base station 110 may include a first transceiver 111, a second transceiver 112, the first antenna Ant1_1, and the second antenna Ant1_2. The first transceiver 111 and the second transceiver 112 may each be connected to one antenna. For example, the first transceiver 111 may be connected to the first antenna Ant1_1 and the second transceiver 112 may be connected to the second antenna Ant1_2. When the base station 110 operates as a transmitting device, the first transceiver 111 and the second transceiver 112 may operate as transmitters, and when the base station 110 operates as a receiving device, the first transceiver 111 and the second transceiver 112 may operate as receivers.

The first transceiver 111 may generate a first signal Sig by merging a first component carrier signal C1 with a second component signal C2 in a transmission mode and output the generated first signal Sig to the electronic device 120. The first transceiver 111 may extract not only the first component carrier C1 but also the second component carrier C2 from the first signal Sig. Each of the first transceiver 111 and the second transceiver 112 may merge and transmit a plurality of component carrier signals and may extract a plurality of component carrier signals from the first signal Sig.

The electronic device 120 may include a third transceiver 121, a fourth transceiver 122, the third antenna Ant2_1, and the fourth antenna Ant2_2. The electronic device 120 may be substantially similar and/or the same as the base station 110, and thus, repeated descriptions of the electronic device 120 described with reference to the base station 110 may be omitted for the sake of brevity.

According to various embodiments, because the electronic device 120 in a MIMO environment includes a plurality of receiving antennas, MMSE weight matrix information for each receiving antenna may be stored in advance. For example, the memory 320 may previously store compressed MMSE weight matrix information for each of the third antenna Ant2_1 and the fourth antenna Ant2_2.

According to various embodiments, simulation results of the NR PDSCH DMRS configuration type 1 are shown in Table 5.

Table 5: NR PDSCH DMRS configuration type 1 Simulation Results

|  | **SNR to achieve BLER 10%** |
|---|---|
| 1RB_Despreading_ON | >38dB |
| 1RB_Despreading_OFF | 33.6dB |

(continued)

|  | SNR to achieve BLER 10% |
|---|---|
| 2RB_Despreading_ON | 36dB |
| 2RB_Despreading_OFF | 32.2dB |

Referring to Table 5, the simulation results are results of a simulation performed in a TDLC300-100 channel environment with high frequency selectivity and shows signal-to-noise ratio (SNR) values for achieving a block error rate (BLER) of 10% for 1RB unit and 2RB unit operations of a despreading OFF method, according to an embodiment, and a related despreading ON method. Because the despreading OFF method that considers inter-layer interference has relatively large frequency selectivity, the despreading OFF method has a lower SNR value for achieving BLER of 10% compared to the despreading ON method, thereby improving performance. According to an embodiment, the matrix sizes and complexities when using a compressed MMSE weight matrix in the NR PDSCH DMRS Configuration type 1 are compared as in Table 6.

Table 6: NR PDSCH DMRS Configuration type 1 Matrix Sizes

|  | Weight Matrix Size | | Matrix Inversion Size | | Number of Multiplications | |
|---|---|---|---|---|---|---|
|  | Original WM | Reduced WM | Original WM | Reduced WM | Original WM | Reduced WM |
| 1RB operation | $12\times6$ | $8\times3$ | $6\times6$ | $3\times3$ | $12\times6\times6$ | $8\times3\times3$ |
| 2RB operation | $24\times12$ | $14\times6$ | $12\times12$ | $6\times6$ | $24\times12\times12$ | $14\times6\times6$ |
| 4RB operation | $48\times24$ | $26\times12$ | $24\times24$ | $12\times12$ | $48\times24\times24$ | $26\times12\times12$ |
| nRB operation | $(12n)\times(6n)$ | $(6n+2)\times(3n)$ | $(6n)\times(6n)$ | $(3n)\times(3n)$ | $(12n)\times(6n)\times(6n)$ | $(6n+2)\times(3n)\times(3n)$ |

That is, by restoring the original MMSE weight matrix based on the compressed MMSE weight matrix and performing channel estimation without OCC despreading based on the restored original MMSE weight matrix, the size of a weight matrix that has to be stored in memory may be reduced and the computational complexity may also be reduced. Additionally, in Table 6, when the 2RB operation uses the compressed MMSE weight matrix (e.g., a reduced WM method), the weight matrix size and the computational complexity slightly may increase compared to when the 1RB operation uses the original MMSE weight matrix (original WM method). Considering that the performance of the 2RB despreading OFF method is better than the 1RB despreading OFF method, performance gains may be obtained with a slight increase in memory and computational complexity when using the compressed MMSE weight matrix (reduced WM method).

According to various embodiments, simulation results of the NR PDSCH DMRS configuration type 2 are shown in Table 7.

Table 7: NR PDSCH DMRS configuration type 2 Simulation Results

|  | SNR to achieve BLER 10% |
|---|---|
| 2RB_Despreading_ON | 25.2dB |
| 2RB_Despreading_OFF | 24.4dB |
| 4RB_Despreading_ON | 24.7dB |
| 4RB_Despreading_OFF | 23.6dB |

Referring to Table 7, the simulation results are results of a simulation performed in a TDLC300-100 channel environment with high frequency selectivity and shows SNR values for achieving a BLER of 10% for 2RB unit and 4RB unit operations of a despreading OFF method according to an embodiment and a related despreading ON method. Because the despreading OFF method that considers inter-layer interference has relatively large frequency selectivity, the despreading OFF method has a lower SNR value for achieving BLER of 10% compared to the despreading ON method, thereby improving performance. According to an embodiment, the matrix sizes and complexities when using a compressed MMSE weight matrix in the NR PDSCH DMRS Configuration type 2 are compared as in Table 6.

Table 8: NR PDSCH DMRS Configuration type 2 Matrix Sizes

| | Weight Matrix Size | | Matrix Inversion Size | | Number of Multiplications | |
|---|---|---|---|---|---|---|
| | Original WM | Reduced WM | Original WM | Reduced WM | Original WM | Reduced WM |
| 1RB operation | $12\times4$ | $9\times2$ | $4\times4$ | $2\times2$ | $12\times4\times4$ | $9\times2\times2$ |
| 2RB operation | $24\times8$ | $15\times4$ | $8\times8$ | $4\times4$ | $24\times8\times8$ | $15\times4\times4$ |
| 4RB operation | $48\times16$ | $27\times8$ | $16\times16$ | $8\times8$ | $48\times16\times16$ | $27\times8\times8$ |
| nRB operation | $(12n)\times(4n)$ | $(6n+3)\times(2n)$ | $(4n)\times(4n)$ | $(2n)\times(2n)$ | $(12n)\times(4n)\times(4n)$ | $(6n+3)\times(2n)\times(2n)$ |

That is, by restoring the original MMSE weight matrix based on the compressed MMSE weight matrix and performing channel estimation without OCC despreading based on the restored original MMSE weight matrix, the size of a weight matrix that has to be stored in memory may be reduced and the computational complexity may also be reduced. In addition, in the case of the same RB operation, the weight matrix size and computational complexity of the despreading ON method may be almost similar to those of the despreading OFF method. Therefore, when using the compressed MMSE weight matrix (reduced WM method) proposed in the disclosure, performance gains may be obtained with similar weight matrix size and computational complexity.

In the embodiments described above, the descriptions thereof have been made based on the DMRS of the NR PDSCH, however, the present disclosure is not limited thereto. According to various embodiments, it may be apparent to those skilled in the art that the same may be applied to the DMRS of the NR PDCCH and the DMRS of the NR PBCH.

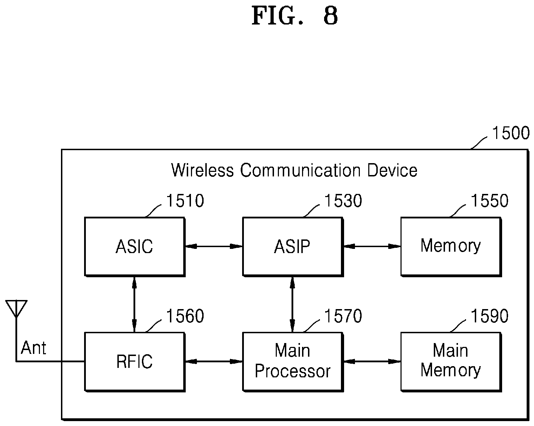

FIG. 8 is a block diagram of a wireless communication device, according to an embodiment.

Referring to FIG. 8, a wireless communication device 1500 may include a modem and a radio frequency integrated circuit (RFIC) 1560, and the modem may include an application specific integrated circuit (ASIC) 1510, an application specific instruction set processor (ASIP) 1530, a memory 1550, a main processor 1570, and a main memory 1590. The wireless communication device 1500 of FIG. 18 may be and/or may include the electronic device 120, according to an embodiment.

The RFIC 1560 may be connected to an antenna Ant and may receive a signal from the outside or transmit a signal to the outside by using a wireless communication network. The ASIP 1530 is an integrated circuit customized for a specific purpose and may support a dedicated instruction set for a specific application and execute instructions included in the instruction set. The memory 1550 may communicate with the ASIP 1530 and may store a plurality of instructions executed by the ASIP 1530 as a non-transitory storage device. For example, the memory 1550 may include, as a non-limiting example, any type of memory accessible by the ASIP 1030, such as random access memory (RAM), read only memory (ROM), tape, a magnetic disk, an optical disk, volatile memory, non-volatile memory, and combinations thereof.

The main processor 1570 may control the wireless communication device 1500 by executing the plurality of instructions. For example, the main processor 1570 may control the ASIC 1510 and the ASIP 1530, process data received through the wireless communication network, or process a user input to the wireless communication device 1500. The main memory 1590 may communicate with the main processor 1570 and may store a plurality of instructions executed by the main processor 1570 as a non-temporary storage device. For example, the main memory 1590 may include, as a non-limiting example, any type of memory accessible by the main processor 1570, such as random access memory (RAM), read-only memory (ROM), tape, a magnetic disk, an optical disk, volatile memory, non-volatile memory, and combinations thereof.

While the present disclosure has been particularly shown and described with reference to embodiments thereof, it is to be understood that various changes in form and details may be made therein without departing from the scope of the following claims.

## Claims

1. A method of operating an electronic device, the method comprising:

receiving, from a base station, a signal comprising a new radio physical downlink shared channel, NR PDSCH, demodulation reference signal, DMRS;
performing depatterning by multiplying the received signal by an orthogonal cover code, OCC, matrix;
calculating a compressed minimum mean square error, MMSE, weight matrix, based on the received signal;
restoring an original MMSE weight matrix from the calculated compressed MMSE weight matrix; and

performing linear MMSE-based channel estimation based on the original MMSE weight matrix and the depatterned received signal.

2. The method of claim 1, wherein the compressed MMSE weight matrix corresponds to

$$W^{(\text{Reduced})} = R_{h_r,p_r}(2R_{p_r,p_r} + \sigma^2 I_{N_{RS}/2})^{-1},$$

and

wherein $R_{h_r,p_r}$ is a cross-covariance matrix of $h_r$ and $p_r$, $R_{p_r,p_r}$ is an auto-covariance matrix of $p_r$, $I$ is an identity matrix, and $\sigma^2$ is a Gaussian distribution.

3. The method of claim 2, wherein a configuration of the DMRS is an NR PDSCH DMRS Configuration type 1,

wherein the $p_r$ is a resource block, RB, channel vector and corresponds to

$$p_r = \begin{bmatrix} p_0 \\ p_2 \\ \vdots \\ p_{6n-2} \end{bmatrix},$$

wherein $h_r$ is a reference signal, RS, channel vector and corresponds to

$$h_r = \begin{bmatrix} h_{-3} \\ h_{-2} \\ \vdots \\ h_{6n-2} \end{bmatrix},$$

and

wherein $n$ is a number of resource blocks, RBs, comprised in a physical resource block, PRB, bundle.

4. The method of claim 3, wherein the restoring of the original MMSE weight matrix comprises:
performing a mapping operation according to

$$\text{for } 0 \leq j \leq 3n - 1, \begin{cases} W_{i,2j} = W^{(\text{Reduced})}_{i+3,j} & , 0 \leq i \leq 6n - 2 \\ W_{i,2j} = \left( W^{(\text{Reduced})}_{(12n-1-i),(3n-1-j)} \right)^* & , 6n - 2 < i \leq 12n - 1 \\ W_{i,2j+1} = W^{(\text{Reduced})}_{i+1,j} & , 0 \leq i \leq 6n \\ W_{i,2j+1} = \left( W^{(\text{Reduced})}_{(12n+1-i),(3n-1-j)} \right)^* & , 6n < i \leq 12n - 1 \end{cases}$$

5. The method of claim 2, wherein a configuration of the DMRS is an NR PDSCH DMRS Configuration type 2,

wherein the $p_r$ is a resource block, RB, channel vector and corresponds to

$$p_r = \begin{bmatrix} p_0 \\ p_2 \\ \vdots \\ p_{4n-2} \end{bmatrix},$$

wherein the $h_r$ is a reference signal, RS, channel vector and corresponds to

$$h_r = \begin{bmatrix} h_{-5} \\ h_{-4} \\ \vdots \\ h_{6n-3} \end{bmatrix},$$

and
wherein $n$ is a number of RBs comprised in a PRB bundle.

6. The method of claim 5, wherein the restoring of the original MMSE weight matrix comprises:
performing a mapping operation according to

$$\text{for } 0 \le j \le 2n-1, \begin{cases} W_{i,2j} = W_{i+5,j}^{(\text{Reduced})} & , 0 \le i \le 6n-3 \\ W_{i,2j} = \left( W_{(12n-1-i),(2n-1-j)}^{(\text{Reduced})} \right)^{*} & , 6n-3 < i \le 12n-1 \\ W_{i,2j+1} = W_{i+4,j}^{(\text{Reduced})} & , 0 \le i \le 6n-2 \\ W_{i,2j+1} = \left( W_{(12n-i),(2n-1-j)}^{(\text{Reduced})} \right)^{*} & , 6n-2 < i \le 12n-1 \end{cases}.$$

7. The method of any preceding claim, wherein the performing of the depatterning comprises:
bypassing OCC despreading.

8. An electronic device, comprising:

a communication circuit configured to receive, from a base station, a signal comprising a new radio physical downlink shared channel, NR PDSCH, demodulation reference signal, DMRS,;
a memory configured to store compressed minimum mean square error, MMSE, weight matrix information; and
a processor configured to:

perform depatterning by multiplying the received signal by an orthogonal cover code, OCC, matrix;
calculate the compressed MMSE weight matrix according to channel observations of the received signal; and
restore an original MMSE weight matrix from the calculated compressed MMSE weight matrix.

9. The electronic device of claim 8, wherein the compressed MMSE weight matrix corresponds to

$$W^{(\text{Reduced})} = R_{h_r,p_r}(2R_{p_r,p_r} + \sigma^2 I_{N_{RS}/2})^{-1},$$

and
wherein $R_{h_r,p_r}$ is a cross-covariance matrix of $h_r$ and $p_r$, $R_{p_r,p_r}$ is an auto-covariance matrix of $p_r$, $I$ is an identity matrix, and $\sigma^2$ is Gaussian distribution.

10. The electronic device of claim 9, wherein a configuration of the DMRS is an NR PDSCH DMRS Configuration type 1,

wherein the $p_r$ is a resource block, RB, channel vector and corresponds to

$$p_r = \begin{bmatrix} p_0 \\ p_2 \\ \vdots \\ p_{6n-2} \end{bmatrix},$$

wherein $h_r$ a reference signal, RS, channel vector and corresponds to

$$h_r = \begin{bmatrix} h_{-3} \\ h_{-2} \\ \vdots \\ h_{6n-2} \end{bmatrix},$$

and

wherein $n$ is a number of resource blocks, RBs, comprised in a physical resource block, PRB, bundle.

11. The electronic device of claim 10, wherein the original MMSE weight matrix is restored by performing a mapping operation according to

$$\text{for } 0 \le j \le 3n-1, \begin{cases} W_{i,2j} = W_{i+3,j}^{(\text{Reduced})} & , 0 \le i \le 6n-2 \\ W_{i,2j} = \left( W_{(12n-1-i),(3n-1-j)}^{(\text{Reduced})} \right)^{*} & , 6n-2 < i \le 12n-1 \\ W_{i,2j+1} = W_{i+1,j}^{(\text{Reduced})} & , 0 \le i \le 6n \\ W_{i,2j+1} = \left( W_{(12n+1-i),(3n-1-j)}^{(\text{Reduced})} \right)^{*} & , 6n < i \le 12n-1 \end{cases}.$$

12. The electronic device of claim 9, wherein a configuration of the DMRS is an NR PDSCH DMRS Configuration type 2,

wherein the $p_r$ is a resource block, RB, channel vector and corresponds to

$$p_r = \begin{bmatrix} p_0 \\ p_2 \\ \vdots \\ p_{4n-2} \end{bmatrix},$$

wherein the $h_r$ is a reference signal, RS, channel vector and corresponds to

$$h_r = \begin{bmatrix} h_{-5} \\ h_{-4} \\ \vdots \\ h_{6n-3} \end{bmatrix},$$

and

wherein $n$ is a number of RBs comprised in a PRB bundle.

13. The electronic device of claim 12, wherein the original MMSE weight matrix is restored by performing a mapping operation according to

$$\text{for } 0 \le j \le 2n-1, \begin{cases} W_{i,2j} = W_{i+5,j}^{(\text{Reduced})} & , 0 \le i \le 6n-3 \\ W_{i,2j} = \left( W_{(12n-1-i),(2n-1-j)}^{(\text{Reduced})} \right)^{*} & , 6n-3 < i \le 12n-1 \\ W_{i,2j+1} = W_{i+4,j}^{(\text{Reduced})} & , 0 \le i \le 6n-2 \\ W_{i,2j+1} = \left( W_{(12n-i),(2n-1-j)}^{(\text{Reduced})} \right)^{*} & , 6n-2 < i \le 12n-1 \end{cases}.$$

14. The electronic device of any of claims 8-13, wherein the processor is further configured to perform linear MMSE-based channel estimation based on the original MMSE weight matrix and the depatterned received signal.

15. The electronic device of any of claims 8-14, wherein the depatterning is not based on OCC despreading.

# FIG. 1

110

NR PDSCH

120

# FIG. 2A

port    port
1000  1001

$p_0$    $p_1$

CDM group0

FD MMSE

$\times W_{i,j}$

$\times W_{i,j}$

port 1000
$\hat{h}_0$

port 1001
$\hat{h}_1$

# FIG. 2B

# FIG. 3

300

320

330

310

MEMORY

325

COMPRESSED MMSE WEIGHT MATRIX INFORMATION

PROCESSOR

335

CHANNEL ESTIMATION CIRCUIT

337

MMSE WEIGHT MATRIX CALCULATION CIRCUIT

COMMUNICATION CIRCUIT

# FIG. 4

```
┌─────────┐
│  START  │
└─────────┘
     │
     ▼
┌──────────────────────────────────┐
│   RECEIVE SIGNAL INCLUDING DMRS  │──── S410
│        FROM BASE STATION         │
└──────────────────────────────────┘
     │
     ▼
┌──────────────────────────────────┐
│     DESCRAMBLE DMRS SEQUENCE     │──── S415
└──────────────────────────────────┘
     │
     ▼
┌──────────────────────────────────┐
│  PERFORM DEPATTERNING BY MULTIPLYING │──── S420
│    RECEIVED SIGNAL BY OCC MATRIX │
└──────────────────────────────────┘
     │
     ▼
┌──────────────────────────────────┐
│   CALCULATE COMPRESSED MMSE WEIGHT │──── S430
│    MATRIX BASED ON RECEIVED SIGNAL │
└──────────────────────────────────┘
     │
     ▼
┌──────────────────────────────────┐
│  RESTORE ORIGINAL MMSE WEIGHT MATRIX │──── S440
│  FROM COMPRESSED MMSE WEIGHT MATRIX │
└──────────────────────────────────┘
     │
     ▼
┌──────────────────────────────────┐
│      PERFORM CHANNEL ESTIMATION  │
│  BY MULTIPLYING ORIGINAL MMSE WEIGHT │──── S450
│       MATRIX AND DEPATTERNED     │
│      RECEIVED SIGNAL TOGETHER.   │
└──────────────────────────────────┘
     │
     ▼
┌─────────┐
│   END   │
└─────────┘
```

# FIG. 5A

| 1RB OPERATION | for $0 \leq j \leq 2,$ | $\begin{cases} \mathcal{W}_{i,2j} = \mathcal{W}_{i+3,j}^{(Reduced)} & , \\ \mathcal{W}_{i,2j} = \left( \mathcal{W}_{(11-i),(2-j)}^{(Reduced)} \right)^{*} & , \\ \mathcal{W}_{i,2j+1} = \mathcal{W}_{i+1,j}^{(Reduced)} & , \\ \mathcal{W}_{i,2j+1} = \left( \mathcal{W}_{(13-i),(2-j)}^{(Reduced)} \right)^{*} & , \end{cases}$ | $0 \leq i \leq 4$ <br> $4 \leq i \leq 11$ <br> $0 \leq i \leq 6$ <br> $6 \leq i \leq 11$ |
|---|---|---|---|
| 2RB OPERATION | for $0 \leq j \leq 5,$ | $\begin{cases} \mathcal{W}_{i,2j} = \mathcal{W}_{i+3,j}^{(Reduced)} & , \\ \mathcal{W}_{i,2j} = \left( \mathcal{W}_{(23-i),(5-j)}^{(Reduced)} \right)^{*} & , \\ \mathcal{W}_{i,2j+1} = \mathcal{W}_{i+1,j}^{(Reduced)} & , \\ \mathcal{W}_{i,2j+1} = \left( \mathcal{W}_{(25-i),(5-j)}^{(Reduced)} \right)^{*} & , \end{cases}$ | $0 \leq i \leq 10$ <br> $10 \leq i \leq 23$ <br> $0 \leq i \leq 12$ <br> $12 \leq i \leq 23$ |
| 4RB OPERATION | for $0 \leq j \leq 11,$ | $\begin{cases} \mathcal{W}_{i,2j} = \mathcal{W}_{i+3,j}^{(Reduced)} & , \\ \mathcal{W}_{i,2j} = \left( \mathcal{W}_{(47-i),(11-j)}^{(Reduced)} \right)^{*} & , \\ \mathcal{W}_{i,2j+1} = \mathcal{W}_{i+1,j}^{(Reduced)} & , \\ \mathcal{W}_{i,2j+1} = \left( \mathcal{W}_{(49-i),(11-j)}^{(Reduced)} \right)^{*} & , \end{cases}$ | $0 \leq i \leq 22$ <br> $22 \leq i \leq 47$ <br> $0 \leq i \leq 24$ <br> $24 \leq i \leq 47$ |
| nRB OPERATION | for $0 \leq j \leq 3n-1,$ | $\begin{cases} \mathcal{W}_{i,2j} = \mathcal{W}_{i+3,j}^{(Reduced)} & , \\ \mathcal{W}_{i,2j} = \left( \mathcal{W}_{(12n-1-i),(3n-1-j)}^{(Reduced)} \right)^{*} & , \\ \mathcal{W}_{i,2j+1} = \mathcal{W}_{i+1,j}^{(Reduced)} & , \\ \mathcal{W}_{i,2j+1} = \left( \mathcal{W}_{(12n+1-i),(3n-1-j)}^{(Reduced)} \right)^{*} & , \end{cases}$ | $0 \leq i \leq 6n-2$ <br> $6n-2 \leq i \leq 12n-1$ <br> $0 \leq i \leq 6n$ <br> $6n \leq i \leq 12n-1$ |

# FIG. 5B

| | | | |
|---|---|---|---|
| 1RB OPERATION | for $0 \leq j \leq 1$, | $\begin{cases} \mathcal{W}_{i,2j} = \mathcal{W}_{i+5,j}^{(Reduced)} & , \\ \mathcal{W}_{i,2j} = \left( \mathcal{W}_{(11-i),(1-j)}^{(Reduced)} \right)^* & , \\ \mathcal{W}_{i,2j+1} = \mathcal{W}_{i+4,j}^{(Reduced)} & , \\ \mathcal{W}_{i,2j+1} = \left( \mathcal{W}_{(12-i),(1-j)}^{(Reduced)} \right)^* & , \end{cases}$ | $0 \leq i \leq 3$ <br><br> $3 \leq i \leq 11$ <br><br> $0 \leq i \leq 4$ <br><br> $4 \leq i \leq 11$ |
| 2RB OPERATION | for $0 \leq j \leq 3$, | $\begin{cases} \mathcal{W}_{i,2j} = \mathcal{W}_{i+5,j}^{(Reduced)} & , \\ \mathcal{W}_{i,2j} = \left( \mathcal{W}_{(23-i),(3-j)}^{(Reduced)} \right)^* & , \\ \mathcal{W}_{i,2j+1} = \mathcal{W}_{i+4,j}^{(Reduced)} & , \\ \mathcal{W}_{i,2j+1} = \left( \mathcal{W}_{(24-i),(3-j)}^{(Reduced)} \right)^* & , \end{cases}$ | $0 \leq i \leq 9$ <br><br> $9 \leq i \leq 23$ <br><br> $0 \leq i \leq 10$ <br><br> $10 \leq i \leq 23$ |
| 4RB OPERATION | for $0 \leq j \leq 7$, | $\begin{cases} \mathcal{W}_{i,2j} = \mathcal{W}_{i+5,j}^{(Reduced)} & , \\ \mathcal{W}_{i,2j} = \left( \mathcal{W}_{(47-i),(7-j)}^{(Reduced)} \right)^* & , \\ \mathcal{W}_{i,2j+1} = \mathcal{W}_{i+4,j}^{(Reduced)} & , \\ \mathcal{W}_{i,2j+1} = \left( \mathcal{W}_{(48-i),(7-j)}^{(Reduced)} \right)^* & , \end{cases}$ | $0 \leq i \leq 21$ <br><br> $21 \leq i \leq 47$ <br><br> $0 \leq i \leq 22$ <br><br> $22 \leq i \leq 47$ |
| nRB OPERATION | for $0 \leq j \leq 2n-1$, | $\begin{cases} \mathcal{W}_{i,2j} = \mathcal{W}_{i+5,j}^{(Reduced)} & , \\ \mathcal{W}_{i,2j} = \left( \mathcal{W}_{(12n-1-i),(2n-1-j)}^{(Reduced)} \right)^* & , \\ \mathcal{W}_{i,2j+1} = \mathcal{W}_{i+4,j}^{(Reduced)} & , \\ \mathcal{W}_{i,2j+1} = \left( \mathcal{W}_{(12n-1-i),(2n-1-j)}^{(Reduced)} \right)^* & , \end{cases}$ | $0 \leq i \leq 6n-3$ <br><br> $6n-3 \leq i \leq 12n-1$ <br><br> $0 \leq i \leq 6n-2$ <br><br> $6n-2 \leq i \leq 12n-1$ |

# FIG. 6A

# FIG. 6B

620

| $W'_{0,0}$ | $W'_{0,1}$ | $W'_{0,2}$ | $W'_{0,3}$ |
|---|---|---|---|
| $W'_{1,0}$ | $W'_{1,1}$ | $W'_{1,2}$ | $W'_{1,3}$ |
| $W'_{2,0}$ | $W'_{2,1}$ | $W'_{2,2}$ | $W'_{2,3}$ |
| $W'_{3,0}$ | $W'_{3,1}$ | $W'_{3,2}$ | $W'_{3,3}$ |
| $W'_{4,0}$ | $W'_{4,1}$ | $W'_{4,2}$ | $W'_{4,3}$ |
| $W'_{5,0}$ | $W'_{5,1}$ | $W'_{5,2}$ | $W'_{5,3}$ |
| $W'_{6,0}$ | $W'_{6,1}$ | $W'_{6,2}$ | $W'_{6,3}$ |
| $W'_{7,0}$ | $W'_{7,1}$ | $W'_{7,2}$ | $W'_{7,3}$ |
| $W'_{8,0}$ | $W'_{8,1}$ | $W'_{8,2}$ | $W'_{8,3}$ |
| $W'_{9,0}$ | $W'_{9,1}$ | $W'_{9,2}$ | $W'_{9,3}$ |
| $W'_{10,0}$ | $W'_{10,1}$ | $W'_{10,2}$ | $W'_{10,3}$ |
| $W'_{11,0}$ | $W'_{11,1}$ | $W'_{11,2}$ | $W'_{11,3}$ |
| $W'_{12,0}$ | $W'_{12,1}$ | $W'_{12,2}$ | $W'_{12,3}$ |
| $W'_{13,0}$ | $W'_{13,1}$ | $W'_{13,2}$ | $W'_{13,3}$ |
| $W'_{14,0}$ | $W'_{14,1}$ | $W'_{14,2}$ | $W'_{14,3}$ |
| $W'_{15,0}$ | $W'_{15,1}$ | $W'_{15,2}$ | $W'_{15,3}$ |
| $W'_{16,0}$ | $W'_{16,1}$ | $W'_{16,2}$ | $W'_{16,3}$ |
| $W'_{17,0}$ | $W'_{17,1}$ | $W'_{17,2}$ | $W'_{17,3}$ |
| $W'_{18,0}$ | $W'_{18,1}$ | $W'_{18,2}$ | $W'_{18,3}$ |
| $W'_{19,0}$ | $W'_{19,1}$ | $W'_{19,2}$ | $W'_{19,3}$ |
| $W'_{20,0}$ | $W'_{20,1}$ | $W'_{20,2}$ | $W'_{20,3}$ |
| $W'_{21,0}$ | $W'_{21,1}$ | $W'_{21,2}$ | $W'_{21,3}$ |
| $W'_{22,0}$ | $W'_{22,1}$ | $W'_{22,2}$ | $W'_{22,3}$ |
| $W'_{23,0}$ | $W'_{23,1}$ | $W'_{23,2}$ | $W'_{23,3}$ |
| $W'_{24,0}$ | $W'_{24,1}$ | $W'_{24,2}$ | $W'_{24,3}$ |

# FIG. 6C

630

| W (Reduced) 0,0 | W (Reduced) 0,1 | W (Reduced) 0,2 | W (Reduced) 0,3 |
|---|---|---|---|
| W (Reduced) 1,0 | W (Reduced) 1,1 | W (Reduced) 1,2 | W (Reduced) 1,3 |
| W (Reduced) 2,0 | W (Reduced) 2,1 | W (Reduced) 2,2 | W (Reduced) 2,3 |
| W (Reduced) 3,0 | W (Reduced) 3,1 | W (Reduced) 3,2 | W (Reduced) 3,3 |
| W (Reduced) 4,0 | W (Reduced) 4,1 | W (Reduced) 4,2 | W (Reduced) 4,3 |
| W (Reduced) 5,0 | W (Reduced) 5,1 | W (Reduced) 5,2 | W (Reduced) 5,3 |
| W (Reduced) 6,0 | W (Reduced) 6,1 | W (Reduced) 6,2 | W (Reduced) 6,3 |
| W (Reduced) 7,0 | W (Reduced) 7,1 | W (Reduced) 7,2 | W (Reduced) 7,3 |
| W (Reduced) 8,0 | W (Reduced) 8,1 | W (Reduced) 8,2 | W (Reduced) 8,3 |
| W (Reduced) 9,0 | W (Reduced) 9,1 | W (Reduced) 9,2 | W (Reduced) 9,3 |
| W (Reduced) 10,0 | W (Reduced) 10,1 | W (Reduced) 10,2 | W (Reduced) 10,3 |
| W (Reduced) 11,0 | W (Reduced) 11,1 | W (Reduced) 11,2 | W (Reduced) 11,3 |
| W (Reduced) 12,0 | W (Reduced) 12,1 | W (Reduced) 12,2 | W (Reduced) 12,3 |
| W (Reduced) 13,0 | W (Reduced) 13,1 | W (Reduced) 13,2 | W (Reduced) 13,3 |
| W (Reduced) 14,0 | W (Reduced) 14,1 | W (Reduced) 14,2 | W (Reduced) 14,3 |

# FIG. 7

# FIG. 8

## EUROPEAN SEARCH REPORT

**Application Number**

EP 24 21 7248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/229493 A1 (LEE JUNGWON [US] ET AL) 13 August 2015 (2015-08-13) * paragraphs [0077], [0086] * * figure 3A * | 1-15 | INV. H04L25/02 |
| A | WO 2022/075944 A1 (ASELSAN ELEKTRONIK SANAYI VE TICARET AS [TR]) 14 April 2022 (2022-04-14) * the whole document * | 1-15 | |
| A | HUAWEI ET AL: "Enhancements on DMRS in Rel-18", 3GPP DRAFT; R1-2208442, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20221010 - 20221019 30 September 2022 (2022-09-30), XP052276367, Retrieved from the Internet: URL:https://ftp.3gpp.org/tsg_ran/WG1_RL1/TSGR1_110b-e/Docs/R1-2208442.zip R1-2208442.docx [retrieved on 2022-09-30] * Section 2 * | 1-15 | **TECHNICAL FIELDS SEARCHED (IPC)**<br><br>H04L |

The present search report has been drawn up for all claims

| Place of search | Date of completion of the search | Examiner |
|---|---|---|
| Munich | 8 April 2025 | Franz, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7248

This annex lists the patent family members relating to the patent documents cited in  the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | | Publication date |
|---|---|---|---|---|
| US 2015229493 A1 | 13-08-2015 | KR | 20150095574 A | 21-08-2015 |
| | | US | 2015229493 A1 | 13-08-2015 |
| WO 2022075944 A1 | 14-04-2022 | TR | 202016016 A2 | 21-04-2022 |
| | | WO | 2022075944 A1 | 14-04-2022 |

EPO FORM P0459

For more details about this annex : see Official Journal of the European Patent Office, No. 12/82